(19) Europäisches Patentamt
European Patent Office
Office européen des brevets

(11) **EP 3 602 721 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **18713199.0**

(22) Anmeldetag: **22.03.2018**

(51) Internationale Patentklassifikation (IPC):
**H02J 3/40** (2006.01) **H02J 3/50** (2006.01)
**H02J 3/38** (2006.01) **H02P 9/42** (2006.01)

(52) Gemeinsame Patentklassifikation (CPC):
**H02J 3/381; H02J 3/40; H02J 3/50; H02P 9/42;**
H02J 2300/10; H02J 2300/28; Y02E 10/72

(86) Internationale Anmeldenummer:
**PCT/EP2018/057236**

(87) Internationale Veröffentlichungsnummer:
**WO 2018/172441 (27.09.2018 Gazette 2018/39)**

(54) **VERFAHREN ZUM EINSPEISEN ELEKTRISCHER LEISTUNG IN EIN ELEKTRISCHES VERSORGUNGSNETZ**

METHOD FOR FEEDING ELECTRICAL POWER INTO AN ELECTRICAL POWER SUPPLY NETWORK

PROCÉDÉ D'INJECTION DE PUISSANCE ÉLECTRIQUE DANS UN RÉSEAU DE DISTRIBUTION D'ÉLECTRICITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2017 DE 102017106213**

(43) Veröffentlichungstag der Anmeldung:
**05.02.2020 Patentblatt 2020/06**

(73) Patentinhaber: **Wobben Properties GmbH**
**26607 Aurich (DE)**

(72) Erfinder:
• **CASSOLI, Jair**
**26603 Aurich (DE)**
• **TRUNG, Truong Duc**
**26605 Aurich (DE)**
• **ROSSO, Roberto**
**26605 Aurich (DE)**
• **ENGELKEN, Sönke**
**28215 Bremen (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 2 793 392 EP-A1- 2 963 759
WO-A2-2011/092193 CN-B- 103 560 524
DE-A1- 102006 047 792

## Beschreibung

Die vorliegende Erfindung betrifft ein Verfahren zum Einspeisen elektrischer Leistung in ein elektrisches Versorgungsnetz. Die vorliegende Erfindung betrifft zudem eine Vorrichtung, insbesondere eine Windenergieanlage zum Einspeisen elektrischer Leistung in ein elektrisches Versorgungsnetz.

Es ist bekannt, mit Windenergieanlagen in ein dreiphasiges elektrisches Versorgungsnetz einzuspeisen. Es ist auch bekannt, dass dabei die Windenergieanlage neben der reinen Leistungseinspeisung auch Aufgaben der Netzstützung wahrnehmen kann. Besonders kann zur Stützung des elektrischen Versorgungsnetzes in Abhängigkeit von Netzzuständen wie der Netzspannung oder der Netzfrequenz die Einspeisung zur Stützung angepasst werden.

Dabei wird bei der Auswertung oder Berücksichtigung solcher Netzzustände häufig davon ausgegangen, dass Großkraftwerke mit direkt gekoppelten Synchrongeneratoren die Verhaltensweise des Netzes bestimmen. Die Windenergieanlagen, oder andere dezentrale Einspeiser, legen ein entsprechendes Verhalten zugrunde und reagieren entsprechend. Besonders ist zu beachten, dass mittels Umrichter einspeisende Systeme, besonders Windenergieanlagen, die mittels eines Vollumrichters bzw. Vollumrichterkonzepts einspeisen, mit sehr hoher Dynamik auf Änderungen von Netzzuständen reagieren können. Ihre Dynamik ist im Wesentlichen frei vorgebbar. Besonders weisen sie, anders als das bei direkt gekoppelten Synchrongeneratoren der Fall ist, kaum eine physikalisch bedingte Dynamik auf, wie bspw. ein gewisses Trägheitsverhalten.

Mit zunehmender Dominanz dezentraler, ganz oder teilweise durch Umrichter gesteuerter Einspeiser verliert damit eine solche physikalische Dynamik, wie die Dynamik direkt gekoppelter Synchrongeneratoren, an Einfluss und Dominanz im elektrischen Versorgungsnetz. Besonders eine netzstabilisierende oder zumindest beruhigende Trägheit direkt gekoppelter Synchrongeneratoren kann dadurch zurückgedrängt werden und müsste anderweitig berücksichtigt werden. Eine Variante ist, mittels Umrichter gesteuerter Einspeiser einen Synchrongenerator bzw. das Verhalten eines Synchrongenerators zu emulieren.

Dazu kann ein physikalisches Modell eines Synchrongenerators in der Steuerung eines Umrichters zum Einspeisen der elektrischen Leistung hinterlegt werden und der Umrichter so gesteuert werden, dass er sich im Wesentlichen wie ein Synchrongenerator verhält.

Das kann aber zum einen den Nachteil haben, dass solche Synchrongeneratormodelle komplex sind und daher bei Programmierung und Parametrierung mitunter schwierig zu handhaben sein können. Auch kann eine zu komplizierte Emulation zu einer zu langsamen Steuerung führen bzw. teure Steuerungshardware erforderlich sein, um eine ausreichend schnelle Steuerung gewährleisten zu können. Durch Filterungen können auch unerwünschte Signalverzögerungen auftreten.

Es kommt hinzu, dass eine Emulation eines Synchrongenerators auch dazu führen kann, dass nicht nur die gewünschten Effekte wie die genannte Stabilisierung oder Beruhigung das hohe Trägheitsmoment erreicht werden, sondern dass auch andere Verhaltensweisen des Synchrongenerators auftreten, die möglicherweise unerwünscht sind. Neben einer potenziellen Gefahr des Außertrittfallens eines Synchrongenerators ist auch zu nennen, dass sich dabei auch nicht optimale, besonders nicht optimal sinusförmige Ströme einstellen können. Diese können auch das Resultat einer Unzulänglichkeit eines verwendeten Synchrongeneratormodells sein.

Die in manchen elektrischen Netzen zunehmende Durchdringung mit durch Umrichter gesteuerter Einspeiser kann auch dazu führen, dass solche Einspeiser in Zukunft Aufgaben im Bereich eines Schwarzstarts oder zumindest eines Netzwiederaufbaus übernehmen müssen.

WO 2011/092193 A2 betriff ein Verfahren zur Emulation von Synchronmaschinen. Die Offenlegungsschrift EP 2 963 759 A1 betrifft die Steuerung eines Wechselrichters zum Einspeisen elektrischer Leistung in ein elektrisches Netz, insbesondere eine Microgrid.

Der vorliegenden Erfindung liegt somit die Aufgabe zugrunde, zumindest eines der o.g. Probleme zu adressieren. Insbesondere soll eine Lösung vorgeschlagen werden, die so arbeitet, dass das Einspeisen elektrischer Leistung mittels eines durch Umrichter gesteuerten Erzeugers möglichst gut an ein elektrisches Versorgungsnetz mit einem geringen Anteil herkömmlicher Großkraftwerke mit direkt gekoppeltem Synchrongenerator angepasst ist. Besonders soll für ein solches Netz oder auch ein Inselnetz eine Einspeisung mit möglichst hoher Qualität und/oder guter Regelungsstabilität vorgeschlagen werden. Zumindest soll eine zu bisher bekannten Lösungen alternative Lösung vorgeschlagen werden Erfindungsgemäß wird ein Verfahren nach Anspruch 1 vorgeschlagen. Dieses Verfahren betrifft das Einspeisen elektrischer Leistung in ein dreiphasiges elektrisches Versorgungsnetz an einem Netzanschlusspunkt mittels einer Windenergieanlage und dabei unter Verwendung eines Wechselrichters bzw. Umrichters. Grundsätzlich kommt auch in Betracht, einen anderen dezentralen Erzeuger zu verwenden, solange dabei ein Wechselrichter bzw. ein Umrichter verwendet wird. Jegliche Beschreibungen und Erläuterungen zu einem Wechselrichter gelten hier auch sinngemäß für Umrichter und umgekehrt.

Dazu wird zunächst vorgeschlagen, dass eine elektrische Netzspannung am Netzanschlusspunkt erfasst wird. Das Erfassen der elektrischen Netzspannung am Netzanschlusspunkt ist besonders deswegen vorteilhaft, weil dort auch eingespeist werden soll und daher dort die elektrische Netzspannung berücksichtigt werden sollte. Grundsätzlich kommt aber auch in Betracht, die Messung an einer anderen Stelle im elektrischen Versorgungsnetz oder auch an einer anderen Stelle vor dem Netzanschlusspunkt, also zwischen der einspeisenden Windenergieanlage und dem Netzanschlusspunkt vorzunehmen, wenn dort eine entsprechend repräsentative Spannung erfasst werden kann.

Es wird dann eine virtuelle Generatorspannung unter Verwendung eines Maschinenmodells bestimmt. Das Maschinenmodel emuliert ein Verhalten einer Synchronmaschine. Die so bestimmte virtuelle Generatorspannung ist somit eine Spannung, die der Spannung eines Generators entspricht, dessen Verhalten durch das Maschinenmodel emuliert wird.

Weiterhin wird die erfasste Netzspannung zum Vergleich mit der virtuellen Generatorspannung vorbereitet. Das bedeutet besonders, dass die bestimmte virtuelle Generatorspannung, die zunächst im Wesentlichen eine Rechengröße ist, mit der erfassten Netzspannung, die tatsächlich gemessen wurde, verglichen werden kann.

Außerdem wird ein Sollstrom als Vorgabe für einen Einspeisestrom in Abhängigkeit der virtuellen Generatorspannung und in Abhängigkeit der zum Vergleich vorbereiteten Netzspannung vorgegeben. Das kann besonders bedeuten, dass eine Abweichung zwischen diesen beiden Spannungen zu einem entsprechenden Sollstrom führt, z.B. so, dass eine höhere Spannungsabweichung zu einem größeren Sollstrom führt.

Entsprechend des so vorgegebenen Sollstroms wird dann ein Einspeisestrom erzeugt und am Netzanschlusspunkt in das elektrische Versorgungsnetz eingespeist. Ein Vergleich zwischen virtueller Generatorspannung und gemessener Spannung am Netzanschlusspunkt führt somit zu einem davon abhängigen Sollstrom und damit auch zu einem entsprechend eingestellten Einspeisestrom.

Es wird nun vorgeschlagen, dass das Vorbereiten der erfassten Netzspannung zum Vergleich mit der virtuellen Generatorspannung ein Transformieren der erfassten Netzspannung in eine Raumzeigerdarstellung umfasst. Die erfasste Netzspannung, nämlich des dreiphasigen elektrischen Versorgungsnetzes und damit insbesondere auch die so erfasste dreiphasige Netzspannung wird somit in eine Raumzeigerdarstellung transformiert. Es wurde erkannt, dass die Vorbereitung der gemessenen Netzspannung in einer Raumzeigerdarstellung besonders die Berücksichtigung des sinusförmigen Grundsignals begünstigt. Die virtuelle Generatorspannung ist ebenfalls das Ergebnis einer Berechnung und ist daher ebenfalls als sinusförmig mit geringer Verzerrung und wenig Rauschen anzunehmen.

Vorzugsweise ist das Transformieren der erfassten Netzspannung in eine Raumzeigerdarstellung eine d/q-Transformation, die auch als qd-Transformation oder als Park-Transformation bezeichnet werden kann. Eine solche d/q-Transformation setzt ein dreiphasiges System voraus und transformiert dies in ein zweiachsiges, sich drehendes Koordinatensystem mit den Achsen d und q bzw. den Werten d und q. Im Idealfall sind die Werte d und q konstant, weil sie sich mit dem Koordinatensystem mitdrehen. Die Transformation setzt grundsätzlich ein System mit sinusförmigen Größen voraus, auch wenn durch zeitliche Änderungen auch von sinusförmigen Größen abweichenden Größen Berücksichtigung finden können. Dennoch liegen solche sinusförmigen Größen zugrunde und die d/q-Transformation bzw. die Berechnung in der Raumzeigerdarstellung kann dadurch auch eine nichtlineare Filterfunktion haben, die von einem Sinussignal abweichende Störungen oder andere Abweichungen zu einem gewissen Gerade herausfiltern kann oder aus dem letztlich zu erzeugenden Sollstrom heraushalten kann.

Besonders für den Vergleich zwischen erfasster Netzspannung und virtueller Generatorspannung ist es vorteilhaft, eine solch sinusförmige Spannung zu verwenden.

Gemäß einer Ausführungsform wird vorgeschlagen, dass die Netzspannung in der Raumzeigerdarstellung, in die sie transformiert wurde, gefiltert wird und anschließend zurücktransformiert wird, so dass der Sollstrom in Abhängigkeit der virtuellen Generatorspannung und in Abhängigkeit der zurücktransformierten Netzspannung vorgegeben wird. Die Filterung der erfassten Netzspannung erfolgt somit in der Raumzeigerdarstellung. Dadurch wird ein Verzerren oder Verzögern des sinusförmigen Grundsignals vermieden. Besonders ergibt sich nach Rücktransformation ein gefiltertes sinusförmiges Signal, für das auch aufgrund der zugrundeliegenden Transformationsvorschrift bzw. Rücktransformationsvorschrift eine Sinusförmig angenommen wird.

Es wurde erkannt, dass sich in der Raumzeigerdarstellung eine einfache Filterung, besonders eine Filterung mit einem PT1-Glied, realisieren lässt, die in dem zurücktransformierten sinusförmigen Signal zu einer vorteilhaften Filterwirkung führt. Besonders wäre für eine Filterung im Zeitbereich mit gleichem Filterergebnis ein wesentlich komplexeres Filter nötig gewesen. Ein solches komplexeres Filter wäre aber aufwändig zu parametrieren und wenig robust. Ändert sich bei einem solchen komplexen Filter die herauszufilternde Störung der Art nach, so ist es möglich, dass die Qualität des Filters sinkt oder sogar seine Wirksamkeit in Frage steht. Die vorgeschlagene Filterung in der Raumzeigerdarstellung ist hingegen robust und im Wesentlichen darauf gezielt angepasst, dass das zu filternde Grundsignal sinusförmig ist. Besonders ist von Bedeutung, dass die Werte d und q in der Raumzeigerdarstellung idealerweise konstant sind. Der Filter kann also, vereinfachend ausgedrückt, im Wesentlichen auf einen konstanten Wert filtern. Trotz nichtlinearer Eingangsgröße bzw. Eingangsgröße mit nichtlinearem Verlauf kann ein einfacher linearer Filter verwendet werden.

Somit wird eine möglichst störungsfreie und verzögerungsfreie Sinusform der erfassten Netzspannung erreicht und diese kann dann gut mit der virtuellen Generatorspannung verglichen werden, die ebenfalls sinusförmig ist. Das Vorgeben des Sollstroms kann so mit hoher Güte in Abhängigkeit dieser rücktransformierten Netzspannung und der virtuellen Generatorspannung erfolgen.

Vorzugsweise legt das Maschinenmodel eine virtuelle Synchronmaschine mit Stator und Läufer zugrunde, die somit ebenfalls virtuell sind, auch ohne dass das erwähnt wird. Zur Bestimmung der Generatorspannung verwendet das Maschinenmodel eine, mehrere oder alle der Größen der folgenden Liste:

- einen virtuellen Drehwinkel $\vartheta$ des Läufers
- eine virtuelle Drehzahl $\omega$ des Läufers,
- eine virtuelle Erregerspannung,
- einen virtuellen Statorstrom,
- ein virtuelles Trägheitsmoment J des Läufers,
- ein virtuelles Drehmoment $T_e$ des Läufers und
- eine virtuelle Reibung Dp des Läufers.

Der Einfachheit halber können diese und andere virtuelle Größen auch nachfolgend ohne den Zusatz "virtuell" bezeichnet werden, denn soweit sie sich auf den virtuellen Generator beziehen, sind sie selbst auch virtuell. Über den virtuellen Drehwinkel ($\vartheta$) des Läufers, also des virtuellen Läufers, wird dessen Position mit aufgenommen, was den Phasenwinkel der Generatorspannung beeinflusst.

Durch das Berücksichtigen der virtuellen Drehzahl ($\omega$) des Läufers kann die Frequenz der Generatorspannung berücksichtigt und beeinflusst werden.

Durch die virtuelle Erregerspannung kann besonders die Amplitude der Generatorspannung beeinflusst und berücksichtigt werden.

Durch den virtuellen Statorstrom kann besonders auch ein Verhalten der virtuellen Synchronmaschine in Bezug auf eine angeschlossene Impedanz berücksichtigt werden.

Über ein virtuelles Trägheitsmoment (J) des Läufers ist besonders auch die Dynamik der virtuellen Synchronmaschine beeinflussbar.

Über ein virtuelles Drehmoment ($T_e$) des Läufers kann ebenfalls das dynamische Verhalten der virtuellen Synchronmaschine berücksichtigt und beeinflusst werden.

Eine virtuelle Reibung des Läufers kann besonders als Verstärkung einer frequenzabhängigen Leistungsregelung realisiert werden. Diese Leistungsregelung ist vorzugsweise Teil des Maschinenmodells und berücksichtigt Abweichungen zwischen der Drehfrequenz des Maschinenmodells und einer Referenzfrequenz. Die Referenzfrequenz kann eine gemessene Netzfrequenz oder eine vorgegebene Frequenz sein. Es kann hierdurch ein frequenzabhängiges Verhalten der virtuellen Synchronmaschine in dem Maschinenmodell berücksichtigt werden.

Vorzugsweise wird der erzeugte Einspeisestrom als virtueller Statorstrom verwendet. Dadurch wird besonders der Bezug der virtuellen Synchronmaschine zu dem tatsächlichen Einspeisen hergestellt. Der erzeugte und dann tatsächlich eingespeiste Einspeisestrom hängt auch von Bedingungen der Beschaltung des Wechselrichterausgangs bzw. Umrichterausgangs ab, besonders von Bedingungen im elektrischen Versorgungsnetz und somit können diese Einflüsse über den Einspeisestrom, der dann den virtuellen Statorstrom bildet, in der virtuellen Synchronmaschine, also in dem Maschinenmodell berücksichtigt werden.

Außerdem oder alternativ wird vorgeschlagen, dass das virtuelle Trägheitsmoment einstellbar ist. Dadurch kann besonders die Dynamik der virtuellen Synchronmaschine beeinflusst werden. Je nach konkreter Situation oder Anforderung kann ein größeres oder kleineres virtuelles Trägheitsmoment gewählt werden. Besonders für eine schnelle Synchronisation der virtuellen Synchronmaschine bzw. des Maschinenmodells mit dem elektrischen Versorgungsnetz, wenn noch nicht eingespeist wird, sondern eine Einspeisung erst vorbereitet wird, kann ein kleines virtuelles Trägheitsmoment sinnvoll sein. Besonders beim Einspeisen in das elektrische Versorgungsnetz kann zur Stützung und Stabilisierung des elektrischen Versorgungsnetzes ein höheres virtuelles Trägheitsmoment sinnvoll sein. Besonders in dem Fall, wenn das elektrische Versorgungsnetz ein Inselnetz ist und durch den Wechselrichter stabilisiert werden muss, oder wenn der Wechselrichter hierbei sogar als Netzbildner arbeiten soll, kommt ein besonders hohes Trägheitsmoment als bevorzugte Einstellung in Betracht. Aber auch in einem elektrischen Versorgungsnetz, das kein Inselnetz ist, können unterschiedliche Netzsituationen auftreten, auf die mit einem entsprechend angepassten virtuellen Trägheitsmoment reagiert werden kann. Es kommt auch in Betracht, dass der Netzbetreiber eines solchen elektrischen Versorgungsnetzes Vorgaben an die Dynamik des Einspeisens macht, auf die mit einem entsprechend eingestellten virtuellen Trägheitsmoment reagiert werden kann.

Vorzugsweise wird das virtuelle Trägheitsmoment in Abhängigkeit eines Netzzustands oder einer Netzeigenschaft eingestellt. Ein Netzzustand ist bspw. eine Überfrequenz oder eine Unterfrequenz, oder überhaupt der aktuelle Wert der Frequenz. Auch die aktuelle Netzspannung ist ein Netzzustand und auch hierunter fällt eine Überspannung oder Unterspannung, um ein weiteres Beispiel zu nennen. Als Netzeigenschaft kann bspw. eine Netzsensitivität berücksichtigt werden, die angegeben werden kann als das Verhältnis einer Spannungsänderung an einem betrachteten Netzanschlusspunkt in Bezug auf eine Änderung der eingespeisten Leistung an dem betrachteten Netzanschlusspunkt. Die Netzsensitivität ist insoweit auch eine auf den Netzanschlusspunkt bezogene Eigenschaft des elektrischen Versorgungsnetzes. Sie kann angeben, wie sensitiv das Netz auf Änderungen reagiert. Besonders bei einer hohen Netzsensitivität kann es vorteilhaft sein, ein entsprechend hohes virtuelles Trägheitsmoment zur Stabilisierung zu wählen.

Gemäß einer Ausgestaltung wird vorgeschlagen, dass eine virtuelle Netzimpedanz zum Vorgeben des Sollstroms berücksichtigt wird, die als eine Impedanz zwischen einem Ausgang des Maschinenmodels bzw. der virtuellen Synchronmaschine, und dem Netzanschlusspunkt berücksichtigt wird. Dazu wird vorgeschlagen, dass die virtuelle Impedanz in ihrer Größe veränderbar ist. Die virtuelle Synchronmaschine wird somit mit einer virtuellen Impedanz beschaltet, so dass diese virtuelle Impedanz besonders auch einen Strom in Abhängigkeit der Generatorspannung beeinflusst.

Über die virtuelle Impedanz können unterschiedliche Eigenschaften des elektrischen Versorgungsnetzes berücksichtigt werden. Das Verhalten der virtuellen Synchronmaschine kann dadurch auf einfache Art und Weise verändert werden, um dadurch veränderte Eigenschaften des elektrischen Versorgungsnetzes zu berücksichtigen. Eine dezidierte Berücksichtigung kann dadurch entbehrlich sein.

Vorzugsweise wird die virtuelle Impedanz abhängig davon ausgewählt, ob in einem Normalzustand des elektrischen Versorgungsnetzes eingespeist wird, oder ob in einem Wiederaufbaumodus eingespeist wird, nachdem das elektrische Versorgungsnetz unterbrochen war oder ausgefallen ist und in dem das elektrische Versorgungsnetz in einen normalen Arbeitspunkt hochgefahren werden muss. Für den Netzwiederaufbaumodus ist besonders vorgesehen, dass die virtuelle Impedanz größer als im Normalzustand des elektrischen Versorgungsnetzes gewählt wird, um das Hochfahren in den normalen Arbeitspunkt erleichtern zu können. Besonders kann bei dem Hochfahren in den normalen Arbeitspunkt eine Generatorspannung nach und nach erhöht werden und gleichzeitig die virtuelle Impedanz so angepasst werden, dass ein geringer Strom fließt, solange in diesem Netzwiederaufbaumodus noch nicht viel Leistung eingespeist werden soll.

Damit kann auf einfache Art und Weise ein Netzwiederaufbau bzw. ein Schwarzstart realisiert werden. Besonders die Anforderung, dass bei einem Schwarzstart zunächst das Erzeugen und Halten einer Spannung im Vordergrund steht, während nur wenig Leistung eingespeist wird, kann dadurch erreicht werden. Gleichzeitig ist ein Normalmodus ebenso mit derselben Anordnung realisierbar. Durch Anpassen der virtuellen Impedanz kann der Einspeiser auf das Einspeisen im Normalmodus angepasst werden.

Gemäß einer Ausführungsform wird vorgeschlagen, dass in dem Maschinenmodell

- eine Drehzahldifferenz zwischen virtueller Drehzahl und einer Referenzdrehzahl gebildet wird,
- als Referenzdrehzahl ein gefilterter Wert der virtuellen Drehzahl oder eine vorgegebenen Frequenz verwendet wird,
- die Differenzdrehzahl über eine Differenzdrehzahlverstärkung zu einem Hilfsdrehmoment berechnet wird,
- das Hilfsdrehmoment über eine Summierstelle auf das virtuelle Trägheitsmoment des Maschinenmodells wirkt, um dadurch die virtuelle Drehzahl auf die Referenzdrehzahl zu regeln, wobei vorzugsweise
- zur Synchronisation des Maschinenmodells mit dem elektrischen Versorgungsnetz die Differenzdrehzahl auf null gesetzt wird.

Über die Berücksichtigung und Rückführung dieser Differenzdrehzahl kann somit eine Ausregelung der virtuellen Drehzahl auf die Referenzdrehzahl erfolgen, wobei nicht unbedingt eine stationäre Genauigkeit mit der Abweichung 0 erreicht werden muss. Besonders kann diese Differenzdrehzahl Rückführung über die Differenzdrehzahlverstärkung als ein sog. Droop-Control bezeichnet werden. Dieser berücksichtigt ein Verhalten einer Synchronmaschine, die bei Abruf einer höheren Leistung zunächst langsamer wird. Durch eine solche höhere Leistungsabgabe, die sich besonders auch durch höhere Ausgangsströme, hier also Einspeiseströme, auszeichnet, erhöht sich das Drehmoment des Synchrongenerators und entsprechend das virtuelle Drehmoment des Synchrongenerators. Dieses virtuelle Drehmoment des Synchrongenerators greift dabei an derselben Summierstelle an, an der auch das Hilfsdrehmoment angreift bzw. aufaddiert wird.

Vorzugsweise ist die Differenzdrehzahlverstärkung ein positiver Faktor und das Hilfsdrehmoment wird an der Summierstelle abgezogen. Verlangsamt sich die Drehung der virtuellen Synchronmaschine, verringert sich also die virtuelle Drehzahl, während die Referenzdrehzahl gleich bleibt oder sich langsamer ändert, so ist die Differenzdrehzahl negativ und das Hilfsdrehmoment ist auch negativ und das Abziehen dieses negativen Hilfsdrehmoments an der Summierstelle führt im Ergebnis zu einer Erhöhung des gesamten Drehmoments an der Summierstelle um den Betrag des Hilfsdrehmoments. Für diesen exemplarischen Fall wird die virtuelle Synchronmaschine also beschleunigt bzw. wirkt einem erhöhten virtuellen Generatormoment entgegen.

Zur Synchronisation des Maschinenmodels mit dem elektrischen Versorgungsnetz wird aber vorgeschlagen, diese Droop-Control außer Kraft zu setzen. Das kann dadurch erfolgen, dass die Differenzdrehzahl unmittelbar auf 0 gesetzt wird. Das kann aber auch indirekt dadurch erfolgen, dass die Differenzendrehzahl als Differenz zweier gleicher Drehzahlen gebildet wird, wodurch die Differenzdrehzahl dann auch 0 ist. Dazu kann der Filter, der die virtuelle Drehzahl filtert, auf Eins gesetzt werden.

Besonders kommt die Variante in Betracht, dass die Referenzdrehzahl die gefilterte virtuelle Drehzahl ist. Es wird dann also von der virtuellen Drehzahl die gefilterte virtuelle Drehzahl abgezogen. Bei einer Filterfunktion, die eine Gesamtverstärkung von 1 aufweist, aber eine Dynamik aufweist, wird diese Differenzdrehzahl somit bei stationärer Drehzahl allmählich 0.

Jedenfalls wird für die Synchronisation vorgeschlagen, die Differenzdrehzahl und damit das Hilfsdrehmoment auf 0 zu setzen und den Droop-Control außer Kraft zu setzen, wodurch eine solche Drehzahlregelung unterdrückt wird. Besonders dann, wenn bei der Synchronisation keine oder keine nennenswerte Ströme fließen, insbesondere also auch die Sollleistung 0 ist, befindet sich also die virtuelle Synchronmaschine im Wesentlichen in einem Leerlaufzustand und hierbei wird dieser Zustand durch diesen Droop-Control auch nicht gestört. Die virtuelle Synchronmaschine kann somit in einer Art Leerlaufsituation in einen Zustand gebracht oder gehalten werden, bei dem sie mit dem elektrischen Versorgungsnetz, in das schließlich eingespeist werden soll, synchron läuft. Ist dieser Fall erreicht, und ändert sich auch die Spannung und Frequenz des elektrischen Versorgungsnetzes nicht, befindet sich die virtuelle Synchronmaschine im Grunde in einem stabilen leerlaufähnlichen Betriebszustand.

Vorzugsweise wird vorgeschlagen, dass

- zur Synchronisation des Maschinenmodells mit dem elektrischen Versorgungsnetz
- eine Sollleistung den Wert null aufweist,
- ein Berechnungsmodell verwendet wird zum Berechnen
- interner virtueller Generatorspannungen und/oder
- des virtuellen Drehmomentes $T_e$, wobei

das Berechnungsmodell zum Berechnen eine, mehrere oder alle Größen verwendet der Liste aufweisend

- den virtuellen Drehwinkel $\vartheta$ des Läufers
- die virtuelle Drehzahl $\omega$ des Läufers,
- die virtuelle Erregerspannung, und
- den Einspeisestrom oder den Sollstrom, wobei

insbesondere keine Frequenz des elektrischen Versorgungsnetzes erfasst wird.

Somit wird hierbei zur Synchronisation des Maschinenmodels mit dem elektrischen Versorgungsnetz zunächst die Sollleistung auf den Wert 0 gesetzt. Die Sollleistung wirkt in dem Maschinenmodell über einen entsprechenden Umrechnungsfaktor als Antriebsmoment auf das virtuelle Trägheitsmoment. Dadurch, dass diese Leistung auf 0 gesetzt wird, wird somit das Antriebsmoment der virtuellen Maschine ebenfalls auf 0 gesetzt. Die virtuelle Synchronmaschine erhält dann also keinen Antrieb. Mit einem Berechnungsmodel werden dann interne virtuelle Generatorspannungen und das virtuelle Drehmoment berechnet. Grundsätzlich kommt auch in Betracht, dass nur eine der Größen berechnet wird, vorteilhaft ist es aber, alle diese genannten Größen zu berechnen. Das Berechnungsmodel verwendet dabei vorzugsweise die Maschinengleichungen einer Synchronmaschine, die entsprechend der angenommenen virtuellen Synchronmaschine parametriert sind.

Das Berechnungsmodell erhält dazu besonders den virtuellen Drehwinkel des Läufers, die virtuelle Drehzahl des Läufers, die virtuelle Erregerspannung und den Einspeisestrom als Eingangsgröße. Diese werden in den Maschinengleichungen benötigt, um die genannten Größen zu berechnen. Grundsätzlich kommen aber auch vereinfachende Berechnungen durch ein vereinfachtes Model theoretisch in Betracht. Es kann auch die virtuelle Drehzahl aus dem virtuellen Drehwinkel berechnet werden, so dass nicht beide Größen in das Berechnungsmodel eingegeben werden müssten.

Als Einspeisestrom kann ein tatsächlich erzeugter Strom verwendet werden, der gemäß des vorgegeben Sollstroms erzeugt wurde. Im Übrigen ist hier und auch für die übrige Beschreibung unter einem Sollstrom und auch dem Einspeisestrom und sich entsprechend ergebenden Strömen jeweils ein 3-phasiger Strom zu verstehen. Der Einspeisestrom, oder der Sollstrom bildet insoweit jeweils drei einzelne Ströme, nämlich jeweils einer Phase. Jedenfalls kann ein geringer Einspeisestrom auch bei der Synchronisierung erzeugt werden, der in kleinere Verbraucher fließen kann, die noch vor dem Netzanschlusspunkt vorhanden sind. Besonders im Falle eines Windparks, der mehrere Windenergieanlagen aufweist, können kleine Verbraucher im entsprechenden Parknetz verwendet werden. Das können bspw. Leitungsinduktivitäten sein oder der Transformator der Windenergieanlage. Auch eine Drossel kommt in Betracht. Im Übrigen kann die virtuelle Impedanz auf die entsprechenden Werte oder Verhalten dieser kleinen Verbraucher eingestellt werden.

Alternativ, wenn noch gar kein Strom fließt, kann der vorgegebene Soll-Strom als Ist-Strom in das Berechnungsmodel eingehen.

Gemäß einer Ausführungsform wird vorgeschlagen, dass

- die virtuelle Erregerspannng
  wenigstens in Abhängigkeit
- einer vorgegebenen Blindleistung und optional
- einer vorgegebenen elektrischen Netzspannung am Netzanschlusspunkt bestimmt wird.

Über eine vorgegebene Blindleistung, die insbesondere mit einer gemessenen Blindleistung verglichen wird, so dass also insbesondere eine solche Blindleistungsabweichung verwendet wird, kann die virtuelle Erregerspannung bestimmt werden. Besonders wird diese Blindleistungsdifferenz oder Blindleistungsabweichung über eine Blindleistungsverstärkung gegeben und zu der virtuellen Erregerspannung integriert. Die Blindleistungsverstärkung ist somit ein Verstärkungsfaktor des Integrators für die Blindleistungsregelung.

Optional wird eine vorgegebene elektrische Netzspannung am Netzanschlusspunkt bestimmt, die die virtuelle Erregerspannung mit beeinflusst. Dazu wird besonders eine Differenz zwischen dieser erfassten Netzspannung und einer vorgegeben Spannung gebildet. Diese Spannungsdifferenz kann über eine Spannungsverstärkung einen Blindleistungswert bilden und dann ebenso wie die beschriebene Differenz zwischen vorgegebener und gemessener Blindleistung die virtuelle Erregerspannung beeinflussen. Die Summe dieser Blindleistungen kann dazu nämlich gemeinsam zu der virtuellen Erregerspannung integriert werden, wobei der Integrator als Integrationskonstante die beschriebene Blindleistungsverstärkung aufweist.

Vorzugsweise wird vorgeschlagen, dass elektrische Größen des Maschinenmodels in Raumzeigerdarstellung, insbesondere gemäß einer d/q-Transformation berechnet werden. Dies betrifft besonders einen dreiphasigen Statorstrom und eine dreiphasige Statorspannung. Die virtuelle Synchronmaschine kann dadurch auf effiziente Art und Weise berechnet werden. Insbesondere kann dadurch gut ein symmetrisches dreiphasiges System berechnet und insbesondere auch gewährleistet werden.

Gemäß einer Ausgestaltung wird vorgeschlagen, dass der Einspeisestrom mittels eines Toleranzbandverfahrens erzeugt wird. Insbesondere wird er somit entsprechend des Toleranzbandverfahrens geregelt. Das Toleranzbandverfahren arbeitet dabei grundsätzlich so, dass um die gewünschte Signalform des zu erzeugenden Stroms herum, also insbesondere um die sinusförmige Signalform des zu erzeugenden Stroms herum, ein Toleranzband gelegt wird. Der jeweils erzeugte Strom wird gemessen und dann abhängig von dem Messwert über entsprechende Schalterstellungen gesteuert, nämlich so, dass der Strom verringert wird, wenn er an eine obere Toleranzbandgrenze stößt, und so, dass er erhöht wird, wenn er an eine untere Toleranzbandgrenze stößt. Das Verwenden eines Toleranzbandverfahrens zum Einspeisen bzw. dazu Erzeugen eines elektrischen sinusförmigen Stroms ist grundsätzlich bekannt. Hier wird aber ein Verfahren vorgeschlagen, dass eine Spannungsprägung trotz Verwendung des Toleranzbandverfahrens erreichen kann. Das ist besonders unter Verwendung der virtuellen Impedanz möglich, über die trotz Vorgabe eines Stroms letztlich eine Ausgangsspannung nicht nur erreicht, sondern auch gezielt vorgegeben werden kann. Besonders kann diese Spannung im Falle eines Netzwiederaufbaus oder sogar eines Schwarzstarts gezielt und geführt erhöht werden.

Besonders ist auch Inselnetzbetrieb möglich und es wird besonders vorgeschlagen, dass in einem Inselbetrieb, wenn der Wechselrichter die Netzfrequenz vorgibt,

- die virtuelle Drehzahl $\omega$ von einer vorgegebenen Netzfrequenz abhängt, insbesondere so, dass in Abhängigkeit einer Differenz zwischen virtueller Drehzahl und vorgegebener Netzfrequenz ein bzw. das in dem Maschinenmodell wirkende Hilfsdrehmoment geregelt wird, und/oder
- die virtuelle Erregerspannung

  - von einer vorgegebenen Spannung des elektrischen Versorgungsnetzes und einer erfassten Spannung des elektrischen Versorgungsnetzes abhängt, insbesondere so, dass in Abhängigkeit einer Differenz zwischen der vorgegebenen Spannung und der erfassten Spannung, ein Hilfsblindleistungswert geregelt wird, von der die virtuelle Erregerspannung abhängt.

Das vorgeschlagene Verfahren, zumindest gemäß dieser Ausführungsform, ist somit besonders für einen Inselbetrieb oder Inselnetzbetrieb geeignet. Als ein Inselnetzbetrieb wird hier ein solcher Betrieb angesehen, bei dem ein geschlossenes elektrisches Versorgungsnetz vorliegt, in dem die Windenergieanlage, oder anderer wechselrichter- oder umrichtergesteuerter Einspeiser, eine solche Dominanz hat, dass er im Wesentlichen das Netz führt, insbesondere hinsichtlich Frequenz und Spannung. Hierfür wird vorgeschlagen, dass die virtuelle Drehzahl von einer vorgegebenen Netzfrequenz abhängt. Hier wird also die Netzfrequenz vorgegeben, insbesondere als feste Referenzfrequenz. In Abhängigkeit einer Differenz zwischen virtuellen Drehzahl, also einer Drehzahl in dem Maschinenmodel, und der vorgegebenen Netzfrequenz, kann ein Hilfsdrehmoment bestimmt werden, das insoweit dadurch geregelt bzw. gesteuert oder eingestellt wird. Dieses Hilfsdrehmoment wirkt in dem Modell dem virtuellen elektrischen Drehmoment entgegen. Die Differenz zwischen dem Hilfsdrehmoment und dem virtuellen elektrischen Drehmoment, ggf. nach Berücksichtigung weiterer Drehmomente, wirkt auf die virtuelle Drehzahl, die sich daraus durch Integration mit entsprechender Integrationszeitkonstante ergibt. Die virtuelle Drehzahl kann dann wiederum Eingangsgröße für das Berechnungsmodel sein und dadurch die Frequenz der Generatorspannung und damit letztlich auch die Frequenz der Referenzströme vorgeben. Durch dieses Verfahren kann also besonders eine feste Frequenz durch die Verwendung der virtuellen Synchronmaschine so umgesetzt werden, dass das elektrische Inselnetz dadurch hinsichtlich Frequenz geführt wird.

Die Regelung des Hilfsdrehmomentes verwendet vorzugsweise einen PI-Regler, um die virtuelle Drehzahl mit stationärer Genauigkeit auf die vorgegebene Netzfrequenz bzw. eine entsprechende Drehzahl auszuregeln.

Außerdem oder alternativ wird hier vorgeschlagen, dass die virtuelle Erregerspannung von einer vorgegebenen Spannung des elektrischen Versorgungsnetzes und einer erfassten Spannung des elektrischen Versorgungsnetzes abhängt. Dies wird besonders so vorgeschlagen, dass in Abhängigkeit einer Differenz zwischen der vorgegebenen Spannung und der erfassten Spannung ein Hilfsblindleistungswert ermittelt wird. Ggf. wird davon ein erfasster Blindleistungswert abgezogen. Dieser so erhaltene Blindleistungswert kann zu der virtuellen Erregerspannung integriert werden, besonders über eine Blindleistungsverstärkung, wie schon erläutert wurde.

Durch die Berücksichtigung der Spannung kann eine Spannungsregelung erfolgen, die auch als Droop-Voltage-Control bezeichnet werden kann. Diese Spannungsregelung kann vorzugsweise aktiviert oder deaktiviert werden. Dadurch, dass die optionale Verwendung der vorgegebenen Spannung und der erfassten Spannung berücksichtigt wird, also aktiviert wird, wird somit diese Spannungsregelung aktiviert. Die virtuelle Synchronmaschine wird damit so gesteuert, dass sie auf Spannungsänderungen im elektrischen Versorgungsnetz, besonders am Netzanschlusspunkt, mit einer Spannungsregelung reagieren kann. Sie kann also dadurch spannungsstabilisierend oder spannungsnachführend agieren. Diese Variante wird besonders für den Inselnetzbetrieb vorgeschlagen, weil dadurch eine Spannungsregelung und damit Spannungsführung erreicht werden kann. Diese Regelung entfaltet dann seine Wirkung über die elektrische Erregerspannung. Dadurch kann das Verfahren in einem Inselnetz nicht nur die Frequenz vorgeben bzw. führen, sondern auch die Spannung, also die Spannungsamplitude.

Für den Inselnetzbetrieb wird somit besonders vorgeschlagen, dass

- das Hilfsdrehmoment über einen PI-Regler geregelt wird und
- die virtuelle Drehzahl sich insbesondere durch eine Integration eines Differenzmomentes, als Differenz zwischen dem Hilfsdrehmoment und dem virtuellen elektrischen Drehmoment, über eine Integrationszeitkonstante ergibt und/oder
- der Hilfsblindleistungswert über einen PI-Regler geregelt wird, und
- die virtuelle Erregerspannung sich insbesondere durch eine Integration einer Differenzblindleistung, als Differenz zwischen der Hilfsblindleistung und einer erfassten Blindleistung, über eine Integrationszeitkonstante ergibt.

Auf das Maschinenmodell wirkt somit ein Drehmoment, das sich aus einer Differenz zwischen dem geregelten Hilfsdrehmoment und dem virtuellen Drehmoment ergibt. Dies wird in dem Maschinenmodell integriert, nämlich über das inverse virtuelle Trägheitsmoment als Integrationszeitkonstante und bestimmt damit die virtuelle Drehzahl. Soweit kein weiteres Drehmoment hinzu kommt, ergibt diese Integration die virtuelle Drehzahl. Hierüber wird somit die Drehzahl der virtuellen Synchronmaschine gesteuert bzw. geregelt.

Über die Blindleistung wird die Ausgangsspannung geregelt bzw. gesteuert. Dazu wird die Spannungsabweichung zu einem Referenzwert bzw. Sollwert als Regelabweichung über eine PI-Regelung in einen Blindleistungswert überführt und damit über die virtuelle Erregerspannung die Spannung durch die virtuelle Synchronmaschine geregelt.

Erfindungsgemäß wird auch eine Windenergieanlage vorgeschlagen, die zum Einspeisen elektrischer Leistung in ein 3-phasiges elektrisches Versorgungsnetz an einem Netzanschlusspunkt vorbereitet ist. Dazu weist sie wenigstens einen Wechselrichter zum Erzeugen eines Einspeisestroms auf. Mit dem Wechselrichter wird dann also ein solcher Einspeisestrom bspw. über ein Toleranzbandverfahren erzeugt. Außerdem ist ein Erfassungsmittel zum Erfassen einer elektrischen Netzspannung vorgesehen und diese elektrische Netzspannung wird insbesondere am Netzanschlusspunkt erfasst. Das Erfassungsmittel kann entsprechend als Messgerät oder Messsensor ausgebildet sein und die Spannung am Netzanschlusspunkt messen. Der tatsächliche Sensor kann aber auch als separates Element vorhanden sein, das nicht Teil der Windenergieanlage bildet. Die Windenergieanlage weist dann eine Schnittstelle auf, über die die erfasste Netzspannung empfangen kann und diese Schnittstelle kann dann als Erfassungsmittel zum Erfassen der elektrischen Netzspannung dienen.

Außerdem ist eine Steuereinrichtung zum Steuern des Einspeisens vorgesehen. Diese Steuereinrichtung steuert besonders den Wechselrichter an. Dazu kann ein spezieller Mikroprozessor in dem Wechselrichter vorgesehen sein, der Schalthandlungen im Wechselrichter vorsieht und der von der Steuereinrichtung angesteuert wird, besonders Sollwerte für den Einspeisestrom erhält. Die Steuereinrichtung kann aber auch unmittelbar auf den Wechselrichter einwirken.

Jedenfalls wird vorgeschlagen, dass die Steuereinrichtung dazu vorbereitet ist, ein Verfahren auszuführen, das eine virtuelle Generatorspannung unter Verwendung eines Maschinenmodells bestimmt, wobei das Maschinenmodell ein Verhalten einer Synchronmaschine emuliert. Somit ist zumindest dieses Maschinenmodell in der Steuereinrichtung

implementiert. Dafür kann die Steuereinrichtung einen entsprechenden Mikroprozessor oder andere Computereinrichtungen aufweisen.

Außerdem umfasst das implementierte Verfahren den Schritt die erfasste Netzspannung zum Vergleich mit der virtuellen Generatorspannung zu vergleichen. Besonders wird die Netzspannung dafür so gefiltert, dass möglichst nur eine Grundwelle der Netzspannung mit der virtuellen Generatorspannung verglichen wird. Dem liegt der Gedanke zugrunde, dass die virtuelle Generatorspannung in der Steuereinrichtung und besonders unter Zuhilfenahme des Maschinenmodels generiert wird und daher keine oder keine nennenswerten Messstörungen aufweist. Da es bei dem Vergleich nicht darum geht, Unterschiede in den Messstörungen zu erkennen, sollte die erfasste Netzspannung möglichst so vorbereitet werden, dass sie keine Messstörungen aufweist, oder zumindest möglichst wenig oder möglichst schwache Messstörungen.

Weiterhin umfasst das implementierte Verfahren den Schritt, einen Solllstrom als Vorgabe für den Einspeisestrom in Abhängigkeit der virtuellen Generatorspannung und in Abhängigkeit der zum Vergleich vorbereiteten Netzspannung vorzugeben. Der Sollstrom wird somit also in Abhängigkeit der virtuellen Generatorspannung und in Abhängigkeit der Netzspannung vorgegeben.

Ferner ist der Wechselrichter dazu vorbereitet, den Einspeisestrom abhängig des Sollstroms zu erzeugen und den erzeugten Einspeisestrom am Netzanschlusspunkt in das elektrische Versorgungsnetz einzuspeisen. Dafür ist besonders auch eine entsprechende Verschaltung am Ausgang des Wechselrichters vorteilhaft. Dazu kann eine entsprechende Drossel gehören. Außerdem ist der Wechselrichter dafür ggf. über wenigstens einen weiteren Transformator mit dem Netzanschlusspunkt verbunden.

Es wird zudem vorgeschlagen, dass das Vorbereiten der erfassten Netzspannung zum Vergleich mit der virtuellen Generatorspannung ein Transformieren der erfassten Netzspannung in eine Raumzeigerdarstellung umfasst. Die Steuereinrichtung ist somit auch dazu vorbereitet, eine solche Transformation vorzusehen. Dazu können entsprechende Transformationsalgorithmen in der Steuereinrichtung implementiert sein. Außerdem ist die Steuereinrichtung mit entsprechender Rechenkapazität, also insbesondere mit einem entsprechenden Mikroprozessor oder anderer Computereinrichtung ausgestattet.

Vorzugsweise ist eine solche Windenergieanlage, insbesondere die Steuereinrichtung, dazu vorbereitet, ein Verfahren zum Einspeisen elektrischer Leistung in ein elektrisches Versorgungsnetz gemäß wenigstens einer vorstehend beschriebenen Ausführungsform auszuführen. Dazu wird vorgeschlagen, die erläuterten Schritte jeweils in der Steuereinheit zu implementieren.

Erfindungsgemäß wird auch ein Windpark vorgeschlagen, der mehrere Windenergieanlagen aufweist, wobei die Windenergieanlagen gemäß wenigstens einer vorstehend beschriebenen Ausführungsform ausgebildet sind. Außerdem oder alternativ wird vorgeschlagen, dass der Windpark eine Parkeinspeiseeinrichtung aufweist, die an einen Netzanschlusspunkt angeschlossen ist und dazu vorbereitet ist, ein Verfahren gemäß einer vorstehend beschriebenen Ausführungsform auszuführen. Besonders wird hierzu ein Parkwechselrichter vorgeschlagen. Eine solche Parkeinspeiseeinrichtung bzw. der Parkwechselrichter können, besonders im Falle eines Windparks mit einem DC-Netz Leistung von den Windenergieanlagen des Windparks insgesamt in das elektrische Versorgungsnetz einspeisen. Ggf. kann das auch mit einer hohen Spannung erfolgen. Besonders wird hier ein zentraler Parkwechselrichter für diese Einspeisung vorgeschlagen. Auch ein solcher zentraler Parkwechselrichter kann basierend auf der vorgeschlagenen emulierten Synchronmaschine arbeiten und die vorgeschlagenen Verfahren, oder eines davon, anwenden.

Nachfolgend wird die Erfindung beispielhaft unter Bezugnahme auf die begleitenden Figuren näher erläutert.

Fig. 1    zeigt eine Windenergieanlage in einer perspektivischen Darstellung.

Fig. 2    zeigt einen Windpark in einer schematischen Darstellung.

Fig. 3    zeigt ein Ersatzschaltbild zur Leistungsübertragung zwischen zwei Wechselspannungsquellen.

Fig. 4    zeigt ein schematisches Strukturbild eines Einspeiseverfahrens gemäß einer Ausführungsform für einen Netzbetrieb.

Fig. 5    zeigt ein Strukturbild eines Verfahrens gemäß einer Ausführungsform bei einem Inselnetzbetrieb.

Fig. 6    zeigt ein Strukturbild zum Veranschaulichen einer Adaption einer virtuellen Impedanz gemäß einer Ausführungsform.

Fig. 7    zeigt ein Strukturbild zum Veranschaulichen eines vorgeschlagenen Spannungsfilterungsprozesses gemäß einer Ausführungsform.

Fig. 8    zeigt Spannungsverläufe zur Erläuterung einer Filterwirkung.

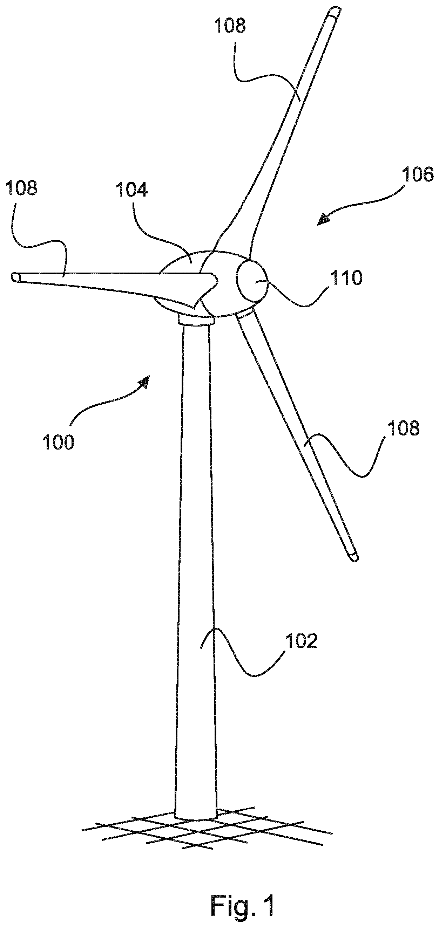

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

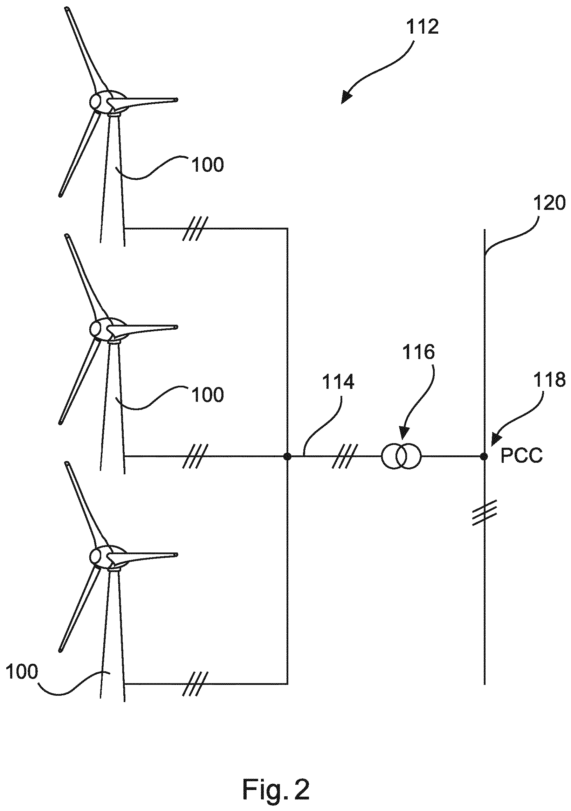

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Das vorgeschlagene Verfahren ist ein Stromregelverfahren eines Vollumrichters bei Insel- und Netzbetrieb basierend auf der Bewegungsgleichung einer Synchronmaschine.Die Erfindung bezieht sich somit auf ein Stromregelverfahren eines Vollumrichters, dessen Kernregelung auf der Bewegungsgleichung einer Synchronmaschine beruht. Diese Regelung ermöglicht u.a. das Trägheitsmoment einer Synchronmaschine bei Netzzustandsänderungen, besonders Änderungen der Netzfrequenz und der Netzspannung möglichst frei einstellbar zu emulieren. Diese Eigenschaft hängt auch ab von einer im Gleichspannungszwischenkreis des Vollumrichters gespeicherten Energie. Es kommt auch eine über eine Zwischenkreisspannungsregelung durch eine Primärenergiequelle in den Zwischenkreis eingespeisten Energie in Betracht. Diese kann dann ebenso im Gleichspannungszwischenkreis zur Verfügung stehen.

Im Folgenden wird das Verfahren beispielhaft auch an Hand mehrerer Beispiele näher erläutert.

In einem Wechselstromsystem werden die übertragenen Wirk- und Blindleistungen zwischen zwei Knotenpunkten mit den Spannungen V und E durch folgende Gleichungen bestimmt:

$$P = \frac{V * E * \sin\delta}{X} \tag{1}$$

$$Q = \frac{E^2 - E * V * \cos\delta}{X} \tag{2}$$

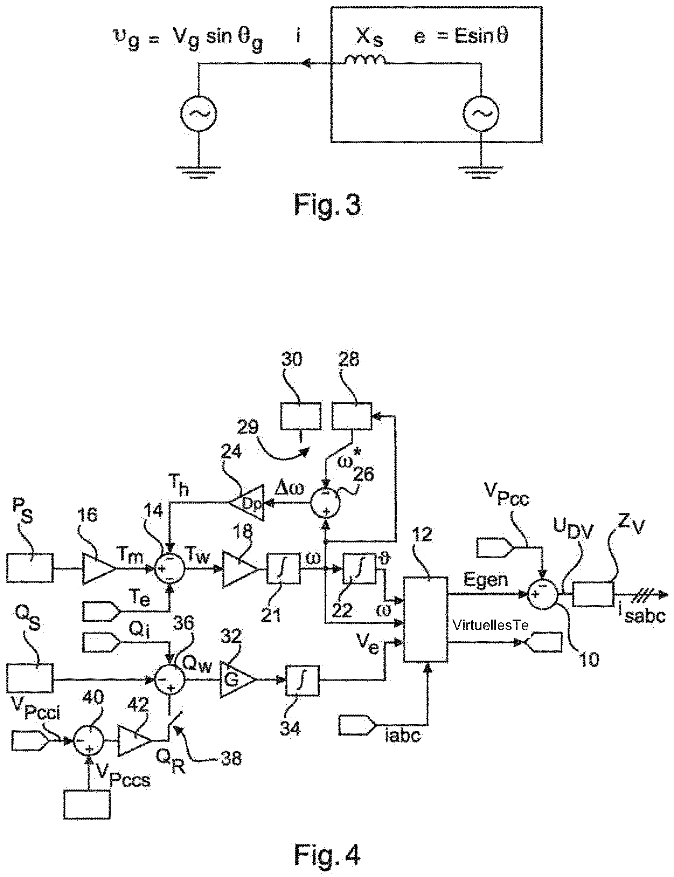

wobei X die Leitungsreaktanz zwischen den beiden Knotenpunkten und $\delta$ die Phasenverschiebung zwischen beiden Spannungen ist. Das wird in dem Ersatzschaltbild der Figur 3 dargestellt.

Angenommen, E sei die Ausgangspannung eines Vollumrichters, der am Netz mit der Spannung V verbunden ist, wird aus den Gleichungen (1) und (2) ersichtlich, dass die übertragenen Wirk- und Blindleistungen durch die Amplituden und Phasenlage der Ausgangspannung des Umrichters beeinflusst werden können.

Die Regelung besteht aus einem äußeren und inneren Regelkreis. In dem äußeren Regelkreis werden die Amplitude und der Winkel der Polradspannung einer virtuellen Synchronmaschine so dynamisch verändert, dass die ins Netz eingespeisten Wirk- und Blindleistungen eines Vollumrichters auf vorgegebene Sollwerte ausgeregelt werden. Die Wirkleistungsregelung basiert auf der Bewegungsgleichung einer Synchronmaschine, während die Blindleistung bzw. Spannungsregelung auf einem P-Regler oder PI Regler beruht.

$$\frac{d\omega_r}{dt} = \frac{T_m - T_e - K_D \Delta\omega_r}{J} \tag{3}$$

Die Gleichung (3) beschreibt die Bewegungsgleichung einer Synchronmaschine, wobei $T_m$ und $T_e$ jeweils das mechanische bzw. elektromagnetische Drehmoment, $\omega_r$ die Rotorgeschwindigkeit, $K_D$ der Dämpfungsfaktor und J die Trägheit der Synchronmaschine darstellen.

$T_m$ wird durch einen Wirkleistungssollwert bestimmt, wie noch zur Figur 4 erläutert wird, während $K_d$ und J einstellbare Parameter sind. Die Variable $K_D$ kann auch als Verstärkung $D_P$ bezeichnet werden.

Die elektrischen Größen der virtuellen Synchronmaschine werden in d/q Komponenten in Bezug auf das Rotorkoordinatensystem transformiert und für die Berechnung von Te eingesetzt. Die d/q-Transformation kann auch als qd Transformation bzw. Transformation in qd Koordinaten bezeichnet werden und für weitere Erläuterungen zur Transformation wird auf die unten genannte Literaturstelle [Lit1] hingewiesen. Für die Transformation wird der Winkel $\theta$, der sich aus der Lösung von (3) und Integration von $\omega_r$ ergibt, verwendet.

Die abc/qd Transformationsmatrizen werden wie folgt definiert:

$$[T_1] = \frac{2}{3}\begin{bmatrix} cos\theta & \cos(\theta - \frac{2\pi}{3}) & \cos(\theta + \frac{2\pi}{3}) \\ sin\theta & \sin(\theta - \frac{2\pi}{3}) & \sin(\theta + \frac{2\pi}{3}) \\ \frac{1}{2} & \frac{1}{2} & \frac{1}{2} \end{bmatrix} \qquad (4)$$

$$[T_1]^{-1} = \begin{bmatrix} cos\theta & sin\theta & \frac{1}{2} \\ \cos(\theta - \frac{2\pi}{3}) & \sin(\theta - \frac{2\pi}{3}) & \frac{1}{2} \\ \cos(\theta + \frac{2\pi}{3}) & \sin(\theta + \frac{2\pi}{3}) & \frac{1}{2} \end{bmatrix} \qquad (5)$$

Bei einer Vollpolmaschine wird $T_e$ wie folgt berechnet:

$$T_e = \frac{3}{2}pL_m i_f i_q \qquad (6)$$

Dabei stellt p die Polpaarzahl, $L_m$ die Gegeninduktivität, $i_f$ den Erregerstrom und $i_q$ die q Komponente des Statorstromes dar, wobei der Anteil $L_m i_f$ sich aus der Blindleistung- und Spannungsregelung ergibt.

Die Amplitude der virtuelle Polradspannung in qd Komponenten errechnet sich aus:

$$E_q = \omega_r L_m i_f \qquad (7)$$

$$E_d = 0 \qquad (8)$$

Durch θ und (5) werden (7) und (8) in abc rücktransformiert. Es ist zu beachten, dass hierbei der Spannungswinkel θ nicht gesondert durch ein Verfahren wie z.B. einen Phasenregelkreis aus der Netzspannung gewonnen wird, sondern sich aus der Lösung des oben beschriebenen Gleichungssystems, insbesondere der Bewegungsgleichung (3), ergibt. Dies ist ein entscheidender Vorteil der Verfahrensklasse der auf Synchronmaschinen basierenden Regelverfahren, da Verzögerungen, wie sie bei Phasenregelkreisen und ähnlichen Verfahren in der Größenordnung von mehreren 10 ms üblich sind, hierbei vermieden werden.

Der Innenregelkreis besteht aus einem Stromhystereseregler, der auch als Toleranzbandverfahren bezeichnet werden kann, dessen Sollwerte sich aus den Augenblickswerten der virtuellen Polradspannungen $e_{abc}$, gemessenen Spannungen an den Umrichterklemmen $v_{abc}$, und einer virtuellen Statorimpedanz $Z_s$, ergeben.

Die virtuelle Statorimpedanz kann so eingestellt werden, dass die Regelungsstabilität gewährleistet wird und besteht aus folgender Gleichung:

$$Z_s = R_s + s\,L_s \qquad (9)$$

Wobei $R_s$ und $L_s$ den Statorwiderstand und die Statorinduktivität der virtuellen Synchronmaschine darstellen.

Somit errechnen sich die Stromsollwerte aus:

$$i_{sabc} = \frac{e_{abc} - v_{abc}}{Z_s} \qquad (10)$$

Die gemessenen Klemmenspannungen des Umrichters sind nicht unbedingt sinusförmig und können je nach Betriebsweise oder Netzzustand viele Oberschwingungen enthalten, welche eine negative Auswirkung auf die Stromsollwerte gemäß Gleichung (10) und die gesamte Regelung haben können. Dies wird zum Beispiel im leerlaufenden Betrieb, d.h. bei Einprägen einer Spannung ohne Last, oder bei stark nichtlinearen Lasten der Fall sein. Prinzipiell wirkt die stets symmetrische Polradspannung des Synchrongeneratorgleichungssystems dieser Unsymmetrie und Oberschwingungshaltigkeit entgegen, sie kann sie jedoch nicht immer vollständig kompensieren. Um diesem Verhalten entgegenzuwirken, werden die Umrichterklemmenspannungen in qd Koordinaten transformiert, ihre Komponenten durch einen Tiefpassfilter erster Ordnung gefiltert und wieder in abc Komponenten zurücktransformiert. Somit wird keine Amplituden- und Phasenkompensation erforderlich. Das wird in dem Ersatzschaltbild der Figur 3 dargestellt.

Nachfolgend wird ein Netzbetrieb erläutert, bei dem in ein elektrisches Versorgungsnetz eingespeist wird, wie bspw. das Europäische Verbundnetz. Das kann sich von dem Einspeisen in ein Inselnetz unterscheiden, wie unten noch beschrieben wird.

Da die Regelung die Eigenschaften einer Synchronmaschine emuliert, ist der Umrichter in der Lage sich mit dem elektrischen Versorgungsetz, das auch einfach als Netz bezeichnet werden kann, selbst zu synchronisieren. Bevor der Umrichter mit dem Netz verbunden wird, findet eine Synchronisierungsphase statt.

Die Wirk- und Blindleistungssollwerte werden auf null gesetzt und die Regelung sorgt dafür, dass die Bedingungen laut (11) erfüllt werden. Das bedeutet, dass die Amplitude und Phasenlage der virtuellen Polradspannungen $e_{abc}$ gleich denen der Netzspannungen $v_{abc}$ am Verknüpfungspunkt (VKP) sind. Somit sind die Wirk- und Blindleistungen im eingeschwungenen Zustand nach Gleichungen (12) und (13) am VKP null.

$$\begin{cases} E = V_g \\ \theta = \theta_g \end{cases} \tag{11}$$

$$P = \frac{V_g * E * sin(\theta - \theta_g)}{X_s} = 0 \tag{12}$$

$$Q = \frac{V_g[E * cos(\theta - \theta_g) - V_g]}{X_s} = 0 \tag{13}$$

Da während der Synchronisierungsphase der Umrichter noch nicht mit dem Netz verbunden ist, sind die Ströme nach Gleichung (10) virtuell. Am Ende der Synchronisierungsphase, wenn Gleichung (11) erfüllt ist, ergibt sich:

$$e_{abc} - v_{abc} = 0 \rightarrow i_{sabc} = 0 \rightarrow i_q = 0 \rightarrow T_e = 0 \tag{14}$$

Wenn die Synchronisierungsphase abgeschlossen ist, kann der Umrichter mit dem Netz verbunden werden und $P_{set}$ und $Q_{set}$ können auf einen neuen Sollwert eingestellt werden. Die für den Netzbetrieb vorgeschlagene Struktur ist in der Figur 4 dargestellt.

Durch das Verfahren soll der Sollstrom $i_{sabc}$ vorgegeben werden. Dieser Sollstrom $i_{sabc}$ ist 3-phasig und er ergibt sich aus einer Differenzspannung $U_{DV}$, die an der virtuellen Impedanz $Z_V$ anliegt. In dem Strukturbild der Figur 4 ist das so dargestellt, dass die Differenzspannung $U_{DV}$ in diese virtuelle Impedanz eingegeben wird.

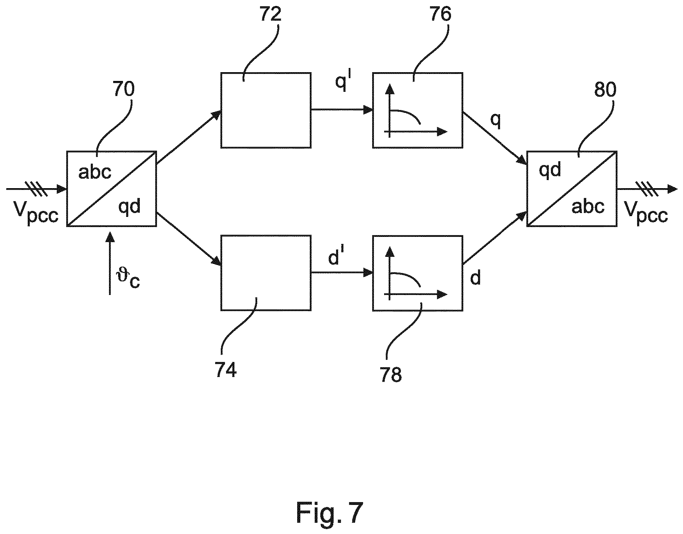

Die Differenzspannung $U_{DV}$ ergibt sich als Differenz aus der gemessenen Spannung $V_{PCC}$, die von der virtuellen Generatorspannung $E_{gen}$ abgezogen wird. Dazu ist ein Ausgangssummierglied 10 vorgesehen. Die Spannung $V_{PCC}$ ist die am Netzanschlusspunkt gemessene Spannung, die allerdings gefiltert ist, nämlich vorzugsweise so, wie dies noch anhand der Figur 7 erklärt wird.

Die Generatorspannung $E_{gen}$ wird dem Berechnungsmodel 12 berechnet und von diesem ausgegeben. Das Berechnungsmodel 12 verwendet dafür Maschinengleichungen des Synchrongenerators, die vorstehend beschrieben wurden. Die Differenz zwischen der Generatorspannung $E_{gen}$ und der gemessenen Spannung $V_{PCC}$ am Netzanschlusspunkt wirkt somit auf die virtuelle Impedanz $Z_V$, woraus sich der Sollstrom $I_{sabc}$ berechnet. Das bedeutet im Grunde, dass eine Impedanz, für die die virtuelle Impedanz $Z_V$ steht, zwischen der Generatorspannung und der Spannung am Netzanschlusspunkt liegt.

Das Berechnungsmodel 12 hat als Eingangsgrößen den virtuellen Drehwinkel $\delta$ des Läufers und eine virtuelle Drehzahl $\omega$ des Läufers. Diese beiden Größen, die insoweit mechanische Größen betreffen bzw. sind, hängen letztendlich von einer Wirkleistung, besonders einer vorgegebenen Wirkleistung ab.

Das Erzeugen des Sollstroms $I_{sabc}$ in Abhängigkeit der virtuellen Impedanz $Z_V$ und der Differenzspannung $U_{DV}$ basiert auf der vorstehend erläuterten Gleichung (10). Insoweit entspricht die Generatorspannung $E_{gen}$ der Generatorspannung $e_{abc}$ der Gleichung (10) und die gemessene und gefilterte Spannung $V_{PCC}$ entspricht der Spannung $v_{abc}$ der Gleichung (10). Die virtuelle Impedanz $Z_V$ entspricht der Impedanz $Z_s$ der Gleichung (10).

Außerdem geht die virtuelle Erregerspannung $U_e$ und der Ausgangsstrom $I_{abc}$ in das Berechnungsmodel 12 ein. Der Ausgangsstrom $I_{abc}$ kann ein gemessener Strom sein, nämlich insbesondere der 3-phasige Ausgangsstrom, der entsprechend des Sollstroms $I_{sabc}$ von dem Wechselrichter erzeugt wurde.

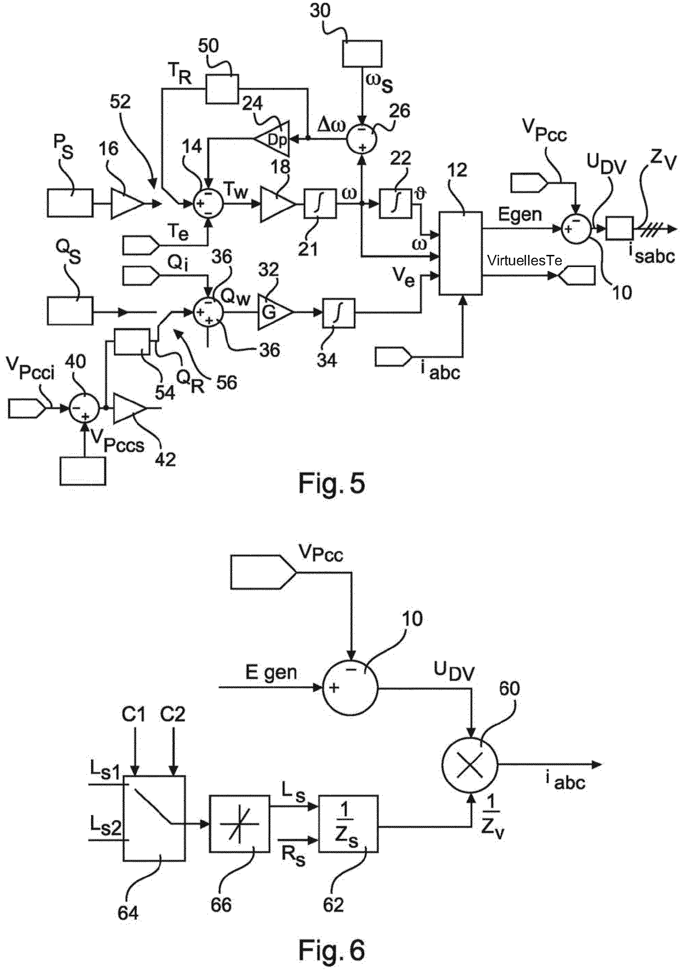

Im Übrigen wird darauf hingewiesen, dass die Figur 4 und die Figur 5 ein virtuelles Maschinenmodel enthalten und jegliche Größen, die sich auf eine Synchronmaschine darin beziehen somit Größen dieser virtuellen Synchronmaschine sind und somit generell als virtuelle Größen anzusehen sind, auch wenn dies nicht im Einzelnen ausgeführt wird.

Außerdem gibt das Berechnungsmodel 12 ein virtuelles elektrisches Drehmoment $T_e$ aus. Dieses virtuelle elektrische Drehmoment $T_e$ wirkt im Betrieb einen mechanischen Drehmoment $T_m$ an dem Drehmomentsummierglied 14 entgegen. Aus dem Drehmomentsummierglied 14 ergibt sich ein wirksames Drehmoment $T_w$. Das mechanische Drehmoment $T_m$ ergibt sich aus einer Leistung, die hier als Sollleistung $P_s$ vorgegeben werden kann. Über die Drehmomentumrechnung 16, die im Wesentlichen die Drehzahl berücksichtigt, ergibt sich aus der eingegebenen Sollleistung $P_s$ das mechanische Drehmoment $T_m$.

Das wirksame Drehmoment $T_w$ wird durch das virtuelle Trägheitsmoment J geteilt, was die Trägheitsverstärkung 18 realisiert, und führt dann über den ersten mechanischen Integrator 21 zur Drehzahl $\omega$. Die Drehzahl $\omega$ führt über den zweiten mechanischen Integrator 22 zum Drehwinkel $\delta$ des Läufers. Diese beiden mechanischen Integratoren 21 und 22 bilden somit im Wesentlichen das mechanische Verhalten des Läufers wieder, auf den das wirksame Drehmoment $T_w$ wirkt.

Außerdem ist noch ein Drehmomentregler mit einer Drehmomentreglerverstärkung 24 vorgesehen. Die Drehmomentreglerverstärkung 24 führt zu einem Hilfsdrehmoment $T_h$, das in dem Drehmomentsummierglied 14 mit negativen Vorzeichen berücksichtigt wird und insoweit das wirksame Drehmoment $T_w$ verringert, solange das Hilfsdrehmoment selbst einen positiven Wert hat.

Dazu wirkt auf die Drehmomentreglerverstärkung 24 das Ergebnis des Drehzahlsummierglieds 26. In dem Drehzahlsummierglied wird gemäß der in Figur 4 gezeigten Konstellation von der virtuellen Drehzahl $\omega$ eine gefilterte Drehzahl $\omega^*$ abgezogen. Das Ergebnis ist die Differenzdrehzahl $\Delta\omega$.

Mit dieser Drehmomentregelung kann besonders für eine Synchronisierung die Drehzahl $\omega$ beeinflusst werden. Solange die Drehzahl $\omega$ sich ändert, kann sich ein Unterschied zwischen der Drehzahl $\omega$ und der gefilterten Drehzahl $\omega^*$ ergeben. Hierfür ist insbesondere vorgesehen, dass das Drehzahlfilter 28 eine Verstärkung von 1 aufweist und somit die gefilterte Drehzahl $\omega^*$ der Drehzahl $\omega$ im stationären Zustand entspricht. In diesem stationären Zustand wird dann auch die Differenzdrehzahl $\Delta\omega$ 0 sein und somit auch das Hilfsdrehmoment $T_h$ 0 sein. Wenn in der Synchronisierung dann auch die vorgegebene Leistung $P_s$ 0 ist und die virtuelle elektrische Maschine insgesamt in einem solchen stationären Leerlaufbetrieb läuft, wird dann auch das virtuelle elektrische Drehmoment $T_e$, zu 0 und damit wird dann auch das wirksame Drehmoment $T_w$ zu 0. Die Drehzahl $\omega$ ändert sich dann nicht mehr. Eine Synchronisierung ist dann abgeschlossen und es kann dann bspw. eine Zuschaltung zum Einspeisen über den Netzanschlusspunkt in das elektrische Versorgungsnetz erfolgen.

Besonders für einen Inselnetzbetrieb kann eine Frequenzvorgabe über den Frequenzvorgabeblock 30 erfolgen, was besonders für den Inselnetzbetrieb vorgesehen ist. Der Inselnetzbetrieb wird nachfolgend noch im Zusammenhang mit der Figur 5 beschrieben.

Die virtuelle Erregerspannung $U_e$ ergibt sich aus der Integration einer wirksamen Blindleistung $Q_W$ unter Berücksichtigung einer Blindleistungsverstärkung G, die auch als Integrationszeitkonstante bezeichnet werden kann. Dazu ist der Blindleistungsverstärkungsblock 32 und der Blindleistungsintegrator 34 vorgesehen.

Die wirksame Blindleistung $Q_w$ ist das Ergebnis der Differenz aus vorgegebener Blindleistung $Q_s$ und gemessener Blindleistung $Q_i$. Die Differenz wird an dem Blindleistungssummierglied 36 gebildet. Die gemessene Blindleistung $Q_i$ ist die Blindleistung, die von dem Wechselrichter in dem Moment eingespeist wird. Die virtuelle Erregerspannung $U_e$ wird somit über die Blindleistung eingestellt bzw. beeinflusst.

Über einen Spannungsregelschalter 38 kann eine Spannungsregelung aktiviert bzw. aufgeschaltet werden. Mit dieser Spannungsregelung kann eine Regelung auf eine vorgegebene Spannung $V_{PCCS}$ vorgenommen werden. Zumindest kann in Abhängigkeit davon eine Spannungsregelung vorgenommen werden. Dazu wird von dieser Sollspannung $V_{PCCS}$ am Netzanschlusspunkt eine dort gemessene Spannung $V_{PCCI}$ abgezogen. Dazu ist das Spannungssummierglied 40 vorgesehen. Für die Spannungsregelung wird die so erhaltene Differenzspannung $\Delta V$ über eine Spannungsverstärkung $D_q$ in dem Spannungsverstärkungsblock 42 gegeben. Es resultiert eine Regelungsblindleistung $Q_R$, die über das Blindleistungssummierglied 36 die wirksame Blindleistung $Q_w$ beeinflusst und damit wird dann über den Blindleistungsverstärkungsblock 32 und den Blindleistungsintegrator 34 die virtuelle Erregungsspannung $U_e$ beeinflusst. Diese Regelung kann durch das Schließen des Spannungsregelungsschalters 38 aktiviert werden. Vorzugsweise ist auch die Spannungsverstärkung $D_q$ des Spannungsverstärkungsblocks 42 veränderlich, um insbesondere die Dynamik dieser Spannungsregelung zu beeinflussen.

Bei Inselnetzbetrieb werden die Frequenz und die Spannung des Netzes auf gewünschte Sollwerte ausgeregelt. Die Frequenzregelung basiert nach wie vor auf der Gleichung (3) mit dem Unterschied, dass $T_m$ durch einen PI Regler, der auf eine Frequenzabweichung reagiert, bestimmt wird und in Figur 5 als $T_R$ bezeichnet ist. Ähnlich wie bei der Frequenzregelung, erfolgt die Spannungsregelung auch durch einen PI Regler, aus dessen Ausgang der Blindleistungssollwert resultiert.

Die entsprechende Regelung ermöglicht dem Umrichter, schwarzstartfähig zu sein. Die Eigenschaft wird durch das Schalten einer kleinen ohmschen oder induktiven Last parallel zu den Umrichterklemmen erreicht, falls die durch den Netzfilter des Umrichters fließenden Leerlaufströme oder Leerlaufströme sonstiger Betriebsmittel für einen zufriedenstellenden Einsatz eines Hysteresestromreglers, zu gering sind. Somit kann sich ein minimaler Umrichterausgangsstrom ausbilden, so dass die Funktionalität der Hysteresesregelung gewährleistet ist. Daraus ergibt sich eine Spannung an den Anschlussklemmen des Umrichters, dessen Frequenz und Amplitude auf die erwünschten Sollwerte ausgeregelt werden.

Der Inselnetzbetrieb ist in Figur 5 veranschaulicht, die eine Struktur wie in Figur 4 zeigt. Soweit die Struktur bzw. die Elemente in beiden Figuren gleich sind bzw. dieselbe Funktion haben, werden gleiche Bezeichnungen und Bezugszeichen verwendet. Zur Erläuterung der Funktionen, die sich für den Inselnetzbetrieb nicht verändert haben, wird insoweit auch auf die Erläuterung zur Figur 4 verwiesen.

Im Inselnetzbetrieb ist nun für eine Leistungsregelung, die im Grunde die mechanische Bewegung des Läufers betrifft, ein zusätzlicher PI-Leistungsregleranteil 50 vorgesehen. Dieser erzeugt ausgehend von einer Differenzdrehzahl $\Delta\omega$ ein Reglerdrehmoment $T_R$, das über das Drehmomentsummierglied 14 das wirksame Drehmoment $T_W$ beeinflusst.

Die Differenzdrehzahl $\Delta\omega$ ergibt sich hierbei als Differenz aus der Drehzahl $\omega$ des Maschinenmodells und einer Solldrehzahl $\omega_s$, die von dem Frequenzvorgabeblock 30 vorgegeben wird. Der Frequenzvorgabeblock 30 gibt die Frequenz für das Inselnetz vor und gibt hier insoweit eine Sollfrequenz vor, umgerechnet in eine Solldrehzahl $\omega_s$. Die Differenz wird in dem Drehzahlsummierglied 26 gebildet. Eine gefilterte Drehzahl $\omega^*$ gemäß der Struktur der Figur 4 kommt hier nicht zum Einsatz. Es kann aber auch die Struktur gemäß Figur 4 insoweit verwendet werden, als dass für den Inselbetrieb von dem Drehzahlfilter 28 auf den Frequenzvorgabeblock 30 geschaltet wird, wie durch den Frequenzumschalter 29 in Figur 4 angedeutet ist. Dadurch kann auch eine temporäre Inselnetzsituation berücksichtigt werden, wenn also nicht nur ein Einsatz grundsätzlich in einem Inselnetz vorgenommen wird, wie bspw. auf einer tatsächlichen kleinen geographischen Insel, sondern wenn aufgrund von Schalthandlungen in einem größeren Versorgungsnetz sich ein Teilbereich dieses Versorgungsnetzes als Inselnetz bildet, also temporär abgekoppelt ist.

Über das Aufschalten des Regeldrehmoments $T_R$ kann somit die Läuferbewegung bzw. virtuelle Läuferbewegung der virtuellen Synchronmaschine so geregelt werden, dass sich die vorgegebene Frequenz bzw. die vorgegebene Solldrehzahl $\omega_s$ einstellt. Die Berücksichtigung einer Sollleistung $P_s$ über die Drehmomentumrechnung 16 ist hier zunächst nicht vorgesehen. Sie kann ggf. über den Sollleistungsschalter 52 ausgewählt werden. Das virtuelle elektrische Drehmoment $T_e$ wirkt allerdings weiterhin über das Drehmomentsummierglied 14 auf das wirksame Drehmoment $T_w$. Insoweit ist nämlich das Maschinenmodel unverändert geblieben, aber es wurde eine andere Regelung implementiert. Zur Spannungsregelung sieht der Inselnetzbetrieb gemäß der Struktur der Figur 5 ebenfalls die Verwendung eines PI-Anteils vor, nämlich als PI-Spannungsregelungsanteil 54. Der PI-Spannungsregelungsanteil 54 gibt eine Regelungsblindleistung $Q_R$ aus, die hier der Einfachheit halber dieselbe Bezeichnung wie in der Figur 4 erhält. Die Regelungsblindleistung $Q_R$ ist nun aber der Ausgang des PI-Spannungsregelungsanteils 54. Es ist also ein integraler Anteil in dieser Regelungsblindleistung $Q_R$ enthalten. Den Eingang dieses PI-Spannungsanteils 54 bildet wieder eine Differenz aus der vorgegeben Spannung $V_{PCCS}$ am Netzanschlusspunkt und einer dort gemessenen Spannung $V_{PCCI}$. Die wirksame Blindleistung $Q_w$ ist nun das Ergebnis der Differenz aus der Regelungsblindleistung $Q_R$ und der gemessenen Blindleistung $Q_i$. Eine vorgegebene Blindleistung $Q_S$ ist nicht wirksam, weil mit dem Blindleistungsschalter 56 auf den Ausgang des PI-Spannungsregelungsanteils 54 geschaltet ist.

Über den PI-Spannungsregelungsanteil 44 wird nun erreicht, dass im Wesentlichen dadurch eine Blindleistung vorgegeben wird, die von der Spannungsabweichung zwischen vorgegebener und gemessener Spannung am Netzanschlusspunkt abhängt. Der integrale Anteil des PI-Spannungsanteils 54 ist zum Erreichen einer stationären Genauigkeit der vorgegebenen Spannung am Netzanschlusspunkt vorgesehen.

Für die Umschaltung von Schwarzstartbetrieb auf Lastbetrieb, also im Inselnetz, und umgekehrt wird eine Adaption der virtuellen Impedanz vorgenommen. Dies wird vorgeschlagen da während des Betriebs ohne signifikante Lasten eine stärkere Tiefpassfilterung der Differenz zwischen der virtuellen Polradspannung und der gemessenen Klemmenspannung notwendig wäre, um die Stabilität zu gewährleisten.

Die Adaption der virtuellen Impedanz ist in der Figur 6 dargestellt. Die Adaption bei der Umschaltung von Schwarzstartbetrieb auf Lastbetrieb basiert auf der gemessenen Ausgangsleistung des Umrichters, was Wirk- und/oder Blindleistung betreffen kann, oder alternativ auf den gemessenen Leistungsgradienten dP/dt und/oder dQ/dt und ist in der Figur 6 als Bedingung 1, bzw. Bedingung C1, bezeichnet. Hierbei wird der induktive Anteil Ls der virtuellen Impedanz Zs verändert und diese Veränderung wird durch einen maximalen Gradienten begrenzt, der als rate limiter bezeichnet werden kann.

Bei dem Übergang vom Lastbetrieb zum Schwarzstartbetrieb wird die Lastimpedanz wesentlich größer. Da sich die Sollwertströme während des Überganges nicht ändern, führt das zu einer deutlichen transienten Erhöhung der Klemmenspannung. Wenn die Differenz zwischen den Amplituden der virtuellen Polradspannung und der gemessenen Klemmenspannung eine bestimmte Grenze überschreitet, was als Bedingung 2 bzw. Bedingung C2 in Figur 6 eingezeichnet ist, wird die virtuelle Impedanz der Regelung geändert.

Die Figur 6 zeigt insoweit eine Umsetzung der virtuellen Impedanz $Z_V$ der Strukturen der Figuren 4 und 5, in dem der Wert dieser virtuellen Impedanz $Z_V$ invers an dem Multiplikator 60 mit der Differenzspannung $U_{DV}$ multipliziert wird, so dass sich der Sollstrom $I_{abc}$ ergibt. Der 3-phasige Sollstrom $I_{abc}$ kann aufgrund seiner 3-Phasigkeit auch als Sollströme bezeichnet werden, nämlich ein Strom je Phase. Gleiches gilt für andere 3-phasige Größen.

Die virtuelle Impedanz $Z_V$, die auch als Zs bezeichnet werden kann, setzt sich aus einem induktiven Teil Ls und einem ohmschen Anteil Rs zusammen und diese Größen bilden somit einen Eingang für den Impedanzblock 62, in dem diese beiden Anteile zusammengesetzt werden und zur weiteren Berechnung die Inverse der Impedanz gebildet und ausgegeben wird.

Gemäß der gezeigten Ausführungsform wird der induktive Anteil $L_S$ verändert, wobei der ohmsche Anteil $R_S$ unverändert bleibt. Aber auch er kann grundsätzlich verändert werden.

Die Änderung oder Einstellung des induktiven Anteils $L_S$ hängt nun besonders davon ab, ob ein Schwarzstartbetrieb oder ein Lastbetrieb vorliegt. Entsprechend kann mit dem Betriebsartschalter 64 abhängig von diesen Betriebsarten zwischen den beiden induktiven Anteilen umgeschaltet werden, nämlich dem induktiven Anteil $L_{S1}$ für den Schwarzstartbetrieb und $L_{S2}$ für den Lastbetrieb. Dazu werden die beiden Bedingungen C1 bzw. C2 in den Betriebsartschalter 64 eingegeben. Da diese Umschaltung im laufenden Betrieb vorgenommen werden kann, die Änderung der virtuellen Induktivität $Z_V$ bzw. $Z_S$ aber nicht sprunghaft erfolgen soll, ist ein Gradientenblock 66 vorgesehen, der dafür sorgt, dass die Änderung als Rampe mit einer maximalen Steigung weitergegeben wird bzw. dass die Änderung auf eine solche Flanke mit maximaler Steigung begrenzt wird. Eine solche maximale Steigung ist insoweit betragsmäßig begrenzt. Es wird also sowohl ein Anstieg als, auch ein Abfall begrenzt. Wenn also in dem Betriebsartschalter 64 zwischen zwei Werten der induktiven Anteile geschaltet wird und der Ausgang des Betriebsschalters 64 ein Sprung ist, ist dann der Ausgang des Gradientenblocks 66 eine Rampe.

Im Ergebnis ändert sich also die virtuelle Impedanz $Z_V$ bzw. $Z_S$ allmählich und diese Änderung kann somit im laufenden Betrieb vorgenommen werden und wirkt über den Multiplikator 60 unmittelbar auf den Sollstrom $I_{abc}$.

Es kommt aber auch in Betracht, besonders im Schwarzstartbetrieb, dass nicht nur zwischen den beiden induktiven Anteilen $L_{S1}$ bzw. $L_{S2}$ umgeschaltet wird, sondern auch dass der jeweils je nach Schalterstellung des Betriebsartschalters 64 wirksame induktive Anteile seinerseits verändert wird. Auch diese Veränderung kann über den Gradientenblock 66 auf einen maximalen Gradienten also eine maximale Flankensteilheit begrenzt werden.

Figur 7 veranschaulicht dann die Filterung der am Netzanschlusspunkt gemessenen Spannung $V_{PCC}$. Die gemessene Spannung wird hier als $V_{PCC}'$ bezeichnet, wohingegen das gefilterte Ergebnis dann die Spannung $V_{PCC}$ ist. Die gemessene Spannung $V'_{PCC}$ wird in den Transformationsblock 70 eingegeben, der diese 3-phasige Spannung in eine grundsätzlich bekannte Darstellung mit einer q-Komponente und einer d-Komponente transformiert. Die Transformation ist auch als d/q-Transformation bekannt und betrifft dieselbe Transformation, die bspw. auch als Park-Transformation bekannt ist. Sie überführt die 3-phasigen Größen, hier nämlich die Spannung der drei Phasen, in ein 2-achsiges Koordinatensystem mit den Achsen d und q. Zur Veranschaulichung beinhaltet ein q-Block 72 die q-Komponente und ein d-Block 74 die d-Komponente. Um zu verdeutlichen, dass diese beiden Komponenten noch zu dem ungefilterten Spannungssignal $V'_{PCC}$ gehören, sind sie ebenfalls als gestrichene Größen, nämlich als q' und d' dargestellt. Sie gehen dann jeweils in einen Filterblock ein, nämlich den q-Filterblock 76 und den d-Filterblock 78. Beide Filterblöcke 76 und 78 können identisch aber auch unterschiedlich sein. Die in Figur 7 vorgeschlagene Struktur verwendet jeweils zwei gleich parametrierte lineare Filter erster Ordnung, also jeweils ein PT1-Glied bzw. PT1-Filter. Beide Komponenten q' und d' werden also über einen Tiefpassfilter erster Ordnung gegeben und das Ergebnis ist dann jeweils die gefilterte Komponente q bzw. d. Diese gefilterten Komponenten q und d werden dann auf den Rücktransformationsblock 80 gegeben und in das 3-phasige System zurücktransformiert. Das Ergebnis ist die gefilterte 3-phasige Spannung $V_{PCC}$, die besonders in den Figuren 4 und 5 auf das Ausgangssummenglied 10 gegeben werden.

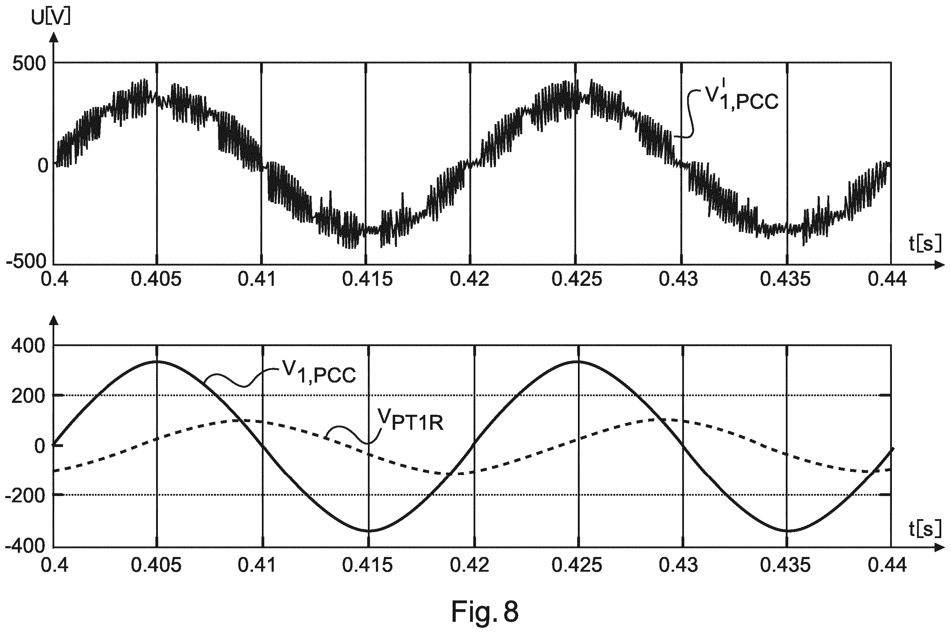

Figur 8 zeigt zwei Spannungsdiagramme, die jeweils eine Spannungsamplitude U in Volt über Zeit in Sekunden zeigt. Die dargestellten Spannungen zeigen somit im Wesentlichen jeweils eine Spannung mit sinusförmigem Verlauf mit einer Periodendauer von 20ms und damit eine Spannung eines 50Hz-Signals.

In der oberen Darstellung der Figur 8 ist die am Netzanschlusspunkt aufgenommene Spannung $V'_{1,PCC}$ einer Phase dargestellt. Das entspricht somit einer Phase der dreiphasigen Spannung $V'_{PCC}$ am Eingang des Transformationsblocks 70 der Figur 7. Es ist zu beachten, dass die Ergebnisse der Figur 8 Simulationsergebnisse sind. Es wird auch darauf hingewiesen, dass zur Darstellung einer elektrischen Spannung teilweise der Buchstabe U und teilweise der Buchstabe V verwendet wird, ohne dass dadurch irgendein technischer Unterschied dargestellt werden soll.

Das obere Diagramm der Figur 8 zeigt somit eine ungefilterte Spannung, die auch erkennbar stark verrauscht ist.

In dem unteren Diagramm der Figur 8, das die identische Zeitachse zum oberen Diagramm aufweist, sind zwei gefilterte Spannungen dargestellt. Die Spannung $V_{1,PCC}$ zeigt den gefilterten Verlauf zur ungefilterten Spannung $V'_{1,PCC}$ des oberen Diagramms, der sich aus der Filterung gemäß Figur 7 ergibt. Die Spannung $V_{1,PCC}$ ist somit die zum oberen Diagramm der Figur 8 korrespondierende Phase des dreiphasigen Spannungssignals $V_{PCC}$ am Ausgang des Rücktransformationsblocks 80 der Figur 7. Wird also ein dreiphasiges Spannungssignal in den Transformationsblock 70 der Figur 7 eingegeben, wobei alle drei Phasen etwa einen Verlauf wie im oberen Diagramm der in Figur 8 gezeigt aufweisen, ergibt sich am Ausgang des Rücktransformationsblocks 80 der Figur 7 ein dreiphasiges Spannungssignal, von dem alle drei Phasen etwa den Verlauf $V_{1,PCC}$ gemäß der unteren Darstellung der Figur 8 aufweisen. Die ungefilterte Spannung $V'_{1,PCC}$ und die gefilterte Spannung $V_{1,PCC}$ betreffen dabei dieselbe Phase.

Es ist zu erkennen, dass zwischen der ungefilterten Spannung $V'_{1,PCC}$ und der entsprechenden gefilterten Spannung $V_{1,PCC}$ praktisch keine Phasenverschiebung auftritt.

Für die Filterung wurde gemäß Figur 7 für die beiden Filterblöcke 76 und 78 jeweils ein PT1-Glied mit derselben Verstärkung, nämlich 1, und derselben Zeitkonstante verwendet, nämlich 10 Millisekunden.

Als Vergleich ist dasselbe verrauschte Signal V'$_{1,PCC}$ der oberen Darstellung direkt über ein PT1-Filter gefiltert worden, das genauso parametriert war, wie die beiden Filterblöcke 76 und 78. Das Ergebnis dieser direkten Filterung mittels PT1-Filters ist gestrichelt in dem unteren Diagramm dargestellt und als V$_{PT1R}$ bezeichnet. Neben der verringerten Amplitude, die sicherlich durch eine Anpassung der Verstärkung des PT1-Filters angepasst werden könnte, ist auch deutlich eine Phasenverschiebung von fast 90 Grad zu erkennen. Das spiegelt tatsächlich auch das von einem PT1-Filter bekannte Phasenverhalten wieder.

Es ist somit zu erkennen, dass die vorgeschlagene Filterung, die nicht nur gezielt auf das dreiphasige Signal angepasst ist, sondern besonders auch die Tatsache berücksichtigt, dass ein sinusförmiges Signal erwartet wird, ein sehr gutes Filterergebnis liefert. Besonders ist die Phasentreue hervorzuheben. Mit dem dabei intern verwendeten PT1-Filter wäre eine direkte Filterung mit ähnlicher Filterqualität also ähnlicher Rauschunterdrückung nur mit einer großen Phasenverschiebung bzw. einem großen Phasennacheilen möglich. Alternativ könnte ein wesentlich komplexeres Filter besonders höherer Ordnung verwendet werden, um besonders die Problematik des Phasenverzugs zu verringern. Dieses Filter müsste dann aber sehr viel komplexer ausgestaltet sein, sehr genau an das zu erwartende Rauschverhalten angepasst sein und dürfte dann wenig robust gegenüber Änderungen des zu filternden Signals, besonders gegenüber überlagerten Störgrößen sein.

Es wird somit eine Leistungsregelung eines Umrichters im Netzbetrieb, sowohl für starke als auch schwache Netze, und ein schwarzstartfähiger Umrichter im Inselnetzbetrieb vorgeschlagen. Dabei wurde auch eine Spannungs- und Frequenzregelung bei Inselnetzbetrieb vorgestellt.

Prinzipiell ist das Regelverfahren für den Einsatz mit verschiedenen Primärenergieformen geeignet, so z.B. Windenergieanlagen, Batteriespeicher, Schwungräder und weitere Formen. Weiterhin ist auch der selbstgeführte Aufbau eines Anlagenversorgungsnetzes, wie z.B. bei einer unterbrechungsfreien Stromversorgung (USV) möglich.

Es wurde somit eine Möglichkeit geschaffen, mit einem Umrichter eine Synchronmaschine zu emulieren. Dem liegen auch die folgenden Erkenntnisse zu Grunde. Die Synchronmaschinenemulation ist besonders wichtig in Hinblick auf eine Steigerung des Anteils durch Leistungselektronik gesteuerter Lasten und Generatoreinheiten, die zu einem auf Leistungselektronik basierten Energieversorgungssystem führen kann. Ein solches System kann Netzinstabilitäten mit sich bringen, da z.B. bei Netzfrequenzänderungen das Trägheitsmoment bzw. die gespeicherte Rotationsenergie konventioneller Kraftwerksgeneratoren nicht mehr vorhanden ist aber durch gezielte Regelungsstrategien emuliert werden kann. Dies wirkt sich somit bei geeigneter Parametrisierung der virtuellen Synchronmaschine positiv auf verschiedene mit der Frequenz im Zusammenhang stehende Phänomene aus, wie z.B. ein Frequenzeinbruch nach Ausfall einer größeren Kraftwerkseinheit oder einer HGÜ-Leitung. Auch Frequenzpendelungen können relevant sein.

Nach Verlust des elektrischen Versorgungsnetzes, insbesondere nach Verlust eines Verbundnetzes, kann die Bildung eines Inselnetzsystems durch Schwarzstartfähigkeit erreicht werden, in dem die Netzspannung und Frequenz vom Umrichter vorgegeben werden kann.

Eine Verwendung der Kerngleichungen einer Synchronmaschine unter Nutzung eines stromgeregelten Umrichters zu einfacher Umsetzung einer Strombegrenzung wird ermöglicht.

Ein Einsatz des Verfahren zu Netzbildung eines Inselnetzes bei Schwarzstart und Umschaltung von lastfrei in den Inselnetzbetrieb und zurück ist ein Vorzug.

Es wird auch vorgeschlagen, dass um die sinusförmigen Sollwertströme zu generieren, Augenblickswerte der Spannungen benutzt werden wie in der Gleichung (10) dargestellt ist. Die gemessenen Klemmenspannungen des Umrichters sind nicht sinusförmig und können viele Oberschwingungen enthalten, deshalb könnten Probleme bei der Berechnung der Sollwertströme entstehen und in einem ungünstigen Fall zu einer Instabilität führen. Der Filterungsprozess der Klemmenspannungen in qd Komponenten, im Vergleich zu dem in abc Koordinatensystem, führt im eingeschwungenen Zustand zu einer besseren Spannungsqualität mit einer kleinen Filterzeitkonstante, ohne die Amplitude und Phasenverschiebung kompensieren zu müssen.

Die virtuelle Impedanz nach Gleichung (9) wird je nach Betriebsmodus adaptiv angepasst, so dass die Regelungsstabilität gewährleistet wird, zumindest gemäß einer Ausführungsform.

Besonders kann auch ein stabiler Betrieb eines stromgeregelten Umrichters mit folgenden Eigenschaften erreicht werden:

Schwarzstart durch Einprägung einer Spannung an den Umrichterklemmen ohne zugeschaltete Last.

Umschalten auf Inselbetrieb mit Last und dabei Ausregelung von Spannung und Frequenz auf wählbare Sollwerte.

Synchronisierung mit einem bestehenden Netz und schnelle Regelung von Wirk- und Blindleistung in Abhängigkeit von Netzfrequenz und Spannung.

Netzbetrieb auch bei sehr kleinen Kurzschlussverhältnissen.

Auf folgende Literatur wird besonders hingewiesen:

[Lit1] P. C. Krause, O. Wasynczuk and S. D. Sudhoff, "Analysis of Electric Machinery and Drive Systems", 2nd Edition, New York, 2002, John Wiley & Sons.

**Patentansprüche**

1. Verfahren zum Einspeisen elektrischer Leistung in ein dreiphasiges elektrisches Versorgungsnetz (120) an einem Netzanschlusspunkt, mittels einer Windenergieanlage (100), unter Verwendung eines Wechselrichters umfassend die Schritte:

   - Erfassen einer elektrischen Netzspannung (V, E), insbesondere am Netzanschlusspunkt,
   - Bestimmen einer virtuellen Generatorspannung ($E_{gen}$) unter Verwendung eines Maschinenmodels, das ein Verhalten einer Synchronmaschine emuliert,
   - Vorbereiten der erfassten Netzspannung (V, E) zum Vergleich mit der virtuellen Generatorspannung ($E_{gen}$),
   - Vorgeben eines Sollstroms ($i_{sabc}$) als Vorgabe für einen Einspeisestrom in Abhängigkeit der virtuellen Generatorspannung ($E_{gen}$) und in Abhängigkeit der zum Vergleich vorbereiteten Netzspannung (V, E) und
   - Erzeugen des Einspeisestroms abhängig des Sollstroms ($i_{sabc}$) und Einspeisen des erzeugten Einspeisestroms am Netzanschlusspunkt in das elektrische Versorgungsnetz (120), wobei

   das Vorbereiten der erfassten Netzspannung (V, E) zum Vergleich mit der virtuellen Generatorspannung ($E_{gen}$) ein Transformieren der erfassten Netzspannung (V, E) in eine Raumzeigerdarstellung umfasst und **dadurch gekennzeichnet, dass**

   eine virtuelle Impedanz ($Z_V$) zum Vorgeben des Sollstroms ($i_{sabc}$) berücksichtigt wird, die als eine Impedanz ($Z_V$) zwischen einem Ausgang des Maschinenmodells bzw. der virtuellen Synchronmaschine, und dem Netzanschlusspunkt berücksichtigt wird und die virtuelle Impedanz ($Z_V$) in ihrer Größe veränderbar ist, und die virtuelle Impedanz ($Z_V$) abhängig davon ausgewählt wird, ob

   - in einem Normalzustand des elektrischen Versorgungsnetzes (120) eingespeist wird, oder
   - in einem Wiederaufbaumodus eingespeist wird, nachdem das elektrische Versorgungsnetz (120) unterbrochen war oder ausgefallen ist, und in dem das elektrische Versorgungsnetz (120) in einen normalen Arbeitspunkt hochgefahren werden muss.

2. Verfahren nach Anspruch 1,
   **dadurch gekennzeichnet, dass**
   Transformieren der erfassten Netzspannung (V, E) in eine Raumzeigerdarstellung eine d/q-Transformation ist.

3. Verfahren nach Anspruch 1 oder 2,
   **dadurch gekennzeichnet, dass**
   die Netzspannung (V, E) in der Raumzeigerdarstellung, in die sie transformiert wurde, gefiltert wird und anschließend zurücktransformiert wird, so dass der Soll-strom ($i_{sabc}$) in Abhängigkeit der virtuellen Generatorspannung ($E_{gen}$) und in Abhängigkeit der zurücktransformierten Netzspannung (V, E) vorgegeben wird.

4. Verfahren nach einem der vorstehenden Ansprüche,
   **dadurch gekennzeichnet, dass**
   das Maschinenmodell eine virtuelle Synchronmaschine mit Stator und Läufer zugrunde legt und zur Bestimmung der Generatorspannung ($E_{gen}$) eine, mehrere oder alle Größen der Liste verwendet, die folgendes aufweist

   - einen virtuellen Drehwinkel ($\vartheta$) des Läufers
   - eine virtuelle Drehzahl ($\omega$) des Läufers,
   - eine virtuelle Erregerspannung ($U_e$),
   - einen virtuellen Statorstrom,
   - ein virtuelles Trägheitsmoment (J) des Läufers
   - ein virtuelles Drehmoment ($T_e$) des Läufers und
   - eine virtuelle Reibung (Dp) des Läufers.

5. Verfahren nach Anspruch 4,
   **dadurch gekennzeichnet, dass**

   - der erzeugte Einspeisestrom als virtueller Statorstrom verwendet wird und außerdem oder alternativ
   - das virtuelle Trägheitsmoment (J) einstellbar ist.

6. Verfahren nach Anspruch 4 oder 5,
   **dadurch gekennzeichnet, dass**

das virtuelle Trägheitsmoment (J) in Abhängigkeit eines Netzzustands oder einer Netzeigenschaft eingestellt wird.

7. Verfahren nach einem der vorstehenden Ansprüche,
**dadurch gekennzeichnet, dass** in dem Maschinenmodell

- eine Drehzahldifferenz zwischen virtueller Drehzahl ($\omega$) und einer Referenzdrehzahl gebildet wird,
- als Referenzdrehzahl ein gefilterter Wert der virtuellen Drehzahl ($\omega$) oder eine vorgegebenen Frequenz verwendet wird,
- die Differenzdrehzahl ($\Delta\omega$) über eine Differenzdrehzahlverstärkung zu einem Hilfsdrehmoment berechnet wird,
- das Hilfsdrehmoment über eine Summierstelle auf das virtuelle Trägheitsmoment (J) des Maschinenmodells wirkt, um dadurch die virtuelle Drehzahl ($\omega$) auf die Referenzdrehzahl zu regeln, wobei vorzugsweise
- zur Synchronisation des Maschinenmodells mit dem elektrischen Versorgungsnetz (120) die Differenzdrehzahl ($\Delta\omega$) auf null gesetzt wird.

8. Verfahren nach einem der vorstehenden Ansprüche,
**dadurch gekennzeichnet, dass**

- zur Synchronisation des Maschinenmodells mit dem elektrischen Versorgungsnetz (120)
- eine Sollleistung den Wert null aufweist,
- ein Berechnungsmodell verwendet wird zum Berechnen

- interner virtueller Generatorspannungen und/oder
- eines bzw. des virtuellen Drehmomentes ($T_e$), wobei

das Berechnungsmodell zum Berechnen eine, mehrere oder alle Größen verwendet der Liste aufweisend

- einen bzw. den virtuellen Drehwinkel ($\vartheta$) des Läufers
- eine bzw. die virtuelle Drehzahl ($\omega$) des Läufers,
- eine bzw. die virtuelle Erregerspannung ($U_e$), und
- den Einspeisestrom oder den Sollstrom ($i_{sabc}$), wobei

insbesondere keine Frequenz des elektrischen Versorgungsnetzes (120) erfasst wird.

9. Verfahren nach einem der vorstehenden Ansprüche,
**dadurch gekennzeichnet, dass**

- eine bzw. die virtuelle Erregerspannung ($U_e$)
wenigstens in Abhängigkeit
- einer vorgegebenen Blindleistung und optional
- einer vorgegebenen elektrischen Netzspannung (V, E) am Netzanschlusspunkt bestimmt wird.

10. Verfahren nach einem der vorstehenden Ansprüche,
**dadurch gekennzeichnet, dass**
elektrische Größen des Maschinenmodells in Raumzeigerdarstellung, insbesondere gemäß einer d/q-Transformation, berechnet werden.

11. Verfahren nach einem der vorstehenden Ansprüche,
**dadurch gekennzeichnet, dass**
der Einspeisestrom mittels eines Toleranzbandverfahrens erzeugt wird.

12. Verfahren nach einem der vorstehenden Ansprüche,
**dadurch gekennzeichnet, dass**
in einem Inselnetzbetrieb, wenn der Wechselrichter die Netzfrequenz vorgibt,

- die virtuelle Drehzahl ($\omega$) von einer vorgegebenen Netzfrequenz abhängt, insbesondere so, dass in Abhängigkeit einer Differenz zwischen virtueller Drehzahl ($\omega$) und vorgegebener Netzfrequenz ein bzw. das in dem Maschinenmodell wirkende Hilfsdrehmoment geregelt wird, und/oder
- die virtuelle Erregerspannung ($U_e$)

- von einer vorgegebenen Spannung des elektrischen Versorgungsnetzes (120) und einer erfassten Spannung des elektrischen Versorgungsnetzes (120) abhängt, insbesondere so, dass in Abhängigkeit einer Differenz zwischen der vorgegebenen Spannung und der erfassten Spannung, ein Hilfsblindleistungswert geregelt wird, von der die virtuelle Erregerspannung ($U_e$) abhängt.

**13.** Verfahren nach Anspruch 12,
**dadurch gekennzeichnet, dass** in dem Inselnetzbetrieb

- das Hilfsdrehmoment über einen PI-Regler geregelt wird und.
- die virtuelle Drehzahl ($\omega$) sich insbesondere durch eine Integration eines Differenzmomentes, als Differenz zwischen dem Hilfsdrehmoment und dem virtuellen elektrischen Drehmoment, über eine Integrationszeitkonstante (1/J) ergibt und/oder
- der Hilfsblindleistungswert über einen PI-Regler geregelt wird, und.
- die virtuelle Erregerspannung ($U_e$) sich insbesondere durch eine Integration einer Differenzblindleistung, als Differenz zwischen der Hilfsblindleistung und einer erfassten Blindleistung, über eine Integrationszeitkonstante (G) ergibt.

**14.** Windenergieanlage (100) zum Einspeisen elektrischer Leistung in ein dreiphasiges elektrisches Versorgungsnetz (120) an einem Netzanschlusspunkt, umfassend

- einen Wechselrichter zum Erzeugen eines Einspeisestroms,
- ein Erfassungsmittel zum Erfassen einer elektrischen Netzspannung (V, E), insbesondere am Netzanschlusspunkt,
- eine Steuereinrichtung zum Steuern des Einspeisens, und die Steuereinrichtung ist vorbereitet zum Ausführen eines Verfahrens, umfassend die Schritte

- Bestimmen einer virtuellen Generatorspannung unter Verwendung eines Maschinenmodels, das ein Verhalten einer Synchronmaschine emuliert,
- Vorbereiten der erfassten Netzspannung (V, E) zum Vergleich mit der virtuellen Generatorspannung und
- Vorgeben eines Sollstroms ($i_{sabc}$) als Vorgabe für den Einspeisestrom in Abhängigkeit der virtuellen Generatorspannung und in Abhängigkeit der zum Vergleich vorbereiteten Netzspannung (V, E) wobei
- der Wechselrichter dazu vorbereitet ist, den Einspeisestrom abhängig des Sollstroms ($i_{sabc}$) zu erzeugen und den erzeugten Einspeisestroms am Netzanschlusspunkt in das elektrische Versorgungsnetz (120) einzuspeisen, wobei

das Vorbereiten der erfassten Netzspannung (V, E) zum Vergleich mit der virtuellen Generatorspannung ein Transformieren der erfassten Netzspannung (V, E) in eine Raumzeigerdarstellung umfasst und **dadurch gekennzeichnet, dass**
eine virtuelle Impedanz ($Z_V$) zum Vorgeben des Sollstroms ($i_{sabc}$) berücksichtigt wird, die als eine Impedanz ($Z_V$) zwischen einem Ausgang des Maschinenmodells bzw. der virtuellen Synchronmaschine, und dem Netzanschlusspunkt berücksichtigt wird und die virtuelle Impedanz ($Z_V$) in ihrer Größe veränderbar ist, und
die virtuelle Impedanz ($Z_V$) abhängig davon ausgewählt wird, ob

- in einem Normalzustand des elektrischen Versorgungsnetzes (120) eingespeist wird, oder
- in einem Wiederaufbaumodus eingespeist wird, nachdem das elektrische Versorgungsnetz (120) unterbrochen war oder ausgefallen ist, und in dem das elektrische Versorgungsnetz (120) in einen normalen Arbeitspunkt hochgefahren werden muss.

**15.** Windenergieanlage (100) nach Anspruch 14,
**dadurch gekennzeichnet, dass**
die Windenergieanlage (100), insbesondere die Steuereinrichtung, dazu vorbereitet ist, ein Verfahren nach einem der Ansprüche 1 bis 15 auszuführen.

**16.** Windpark (112) mit mehreren Windenergieanlagen (100), wobei

- Windenergieanlagen (100) nach Anspruch 14 oder 15 verwendet werden und/oder
- eine Parkeinspeiseeinrichtung, insbesondere ein Parkwechselrichter, vorgesehen ist, der angeschlossen ist an einen Netzanschlusspunkt und dazu vorbereitet, ein Verfahren nach einem der Ansprüche 1 bis 13 auszuführen.

**Claims**

1.  A method for feeding electrical power into a three-phase electrical power supply network (120) at a network connection point, in particular by means of a wind power installation (100), using an inverter, comprising the following steps:

    - detecting an electrical network voltage (V, E), in particular at the network connection point,
    - determining a virtual generator voltage ($E_{gen}$) using a machine model that emulates a behavior of a synchronous machine,
    - preparing the detected network voltage (V, E) for comparison with the virtual generator voltage ($E_{gen}$),
    - predefining a setpoint current ($I_{sabc}$) as predefinition for an infeed current as a function of the virtual generator voltage ($E_{gen}$) and as a function of the network voltage prepared for comparison, and
    - generating the infeed current depending on the setpoint current ($I_{sabc}$) and feeding the generated infeed current at the network connection point into the electrical power supply network (120), wherein preparing the detected network voltage (V, E) for comparison with the virtual generator voltage ($E_{gen}$) comprises transforming the detected network voltage (V, E) into a space vector representation,
    **characterized in that**
    a virtual impedance (Zv) is taken into account for predefining the setpoint current ($I_{sabc}$), which virtual impedance (Zv) is taken into account as an impedance between an output of the machine model or the virtual synchronous machine and the network connection point, and the magnitude of the virtual impedance (Zv) is variable, and the virtual impedance (Zv) is selected depending on whether

    - infeed is effected in a normal state of the electrical power supply network (120), or
    - infeed is effected in a recovery mode after interruption or failure of the electrical power supply network (120), in which recovery mode the electrical power supply network (120) must be run up to a normal operating point.

2.  The method as claimed in claim 1,
    **characterized in that**
    transforming the detected network voltage (V, E) into a space vector representation is a d/q transformation.

3.  The method as claimed in claim 1 or 2,
    **characterized in that**
    the network voltage (V, E) in the space vector representation into which it was transformed is filtered and is subsequently subjected to inverse transformation, such that the setpoint current ($I_{sabc}$) is predefined as a function of the virtual generator voltage ($E_{gen}$) and as a function of the inverse-transformed network voltage (V, E).

4.  The method as claimed in any of the preceding claims,
    **characterized in that**
    the machine model takes as a basis a virtual synchronous machine having a stator and a rotor and for determining the generator voltage ($E_{gen}$) uses one, a plurality or all of the variables in the list comprising the following:

    - a virtual angle of rotation ($\vartheta$) of the rotor,
    - a virtual rotational speed ($\omega$) of the rotor,
    - a virtual excitation voltage ($U_e$),
    - a virtual stator current,
    - a virtual moment of inertia (J) of the rotor,
    - a virtual torque ($T_e$) of the rotor, and
    - a virtual friction (Dp) of the rotor.

5.  The method as claimed in claim 4,
    **characterized in that**

    - the generated infeed current is used as virtual stator current and additionally or alternatively
    - the virtual moment of inertia (J) is adjustable.

6.  The method as claimed in claim 4 or 5,
    **characterized in that**
    the virtual moment of inertia (J) is set as a function of a network state or a network property.

**7.** The method as claimed in any of the preceding claims,
**characterized in that** in the machine model

- a rotational speed difference between a virtual rotational speed ($\omega$) and a reference rotational speed is formed,
- a filtered value of the virtual rotational speed ($\omega$) or a predefined frequency is used as the reference rotational speed,
- the difference rotational speed ($\Delta\omega$) is calculated by way of a difference rotational speed gain with respect to an auxiliary torque,
- the auxiliary torque acts on the virtual moment of inertia (J) of the machine model by way of a summing point in order thereby to control the virtual rotational speed ($\omega$) to the reference rotational speed, wherein preferably
- the difference rotational speed ($\Delta\omega$) is set to zero for the purpose of synchronizing the machine model with the electrical power supply network (120).

**8.** The method as claimed in any of the preceding claims,
**characterized in that**

- for the purpose of synchronizing the machine model with the electrical power supply network (120),
- a setpoint power has the value zero,
- a calculation model is used for calculating

- internal virtual generator voltages and/or
- a or the virtual torque ($T_e$), wherein

the calculation model uses for calculating one, a plurality or all of the variables in the list comprising

- a or the virtual angle of rotation ($\vartheta$) of the rotor,
- a or the virtual rotational speed ($\omega$) of the rotor,
- a or the virtual excitation voltage ($U_e$), and
- the infeed current or the setpoint current ($I_{sabc}$), wherein

in particular no frequency of the electrical power supply network (120) is detected.

**9.** The method as claimed in any of the preceding claims,
**characterized in that**

- a or the virtual excitation voltage ($U_e$) is determined
at least as a function of
- a predefined reactive power and optionally
- a predefined electrical network voltage (V, E) at the network connection point.

**10.** The method as claimed in any of the preceding claims,
**characterized in that**
electrical variables of the machine model are calculated in space vector representation, in particular in accordance with a d/q transformation.

**11.** The method as claimed in any of the preceding claims,
**characterized in that** the infeed current is generated by means of a tolerance band method.

**12.** The method as claimed in any of the preceding claims,
**characterized in that**
in island network operation, if the inverter predefines the network frequency,

- the virtual rotational speed ($\omega$) is dependent on a predefined network frequency, in particular such that a or the auxiliary torque acting in the machine model is controlled as a function of a difference between virtual rotational speed ($\omega$) and predefined network frequency, and/or
- the virtual excitation voltage ($U_e$)
- is dependent on a predefined voltage of the electrical power supply network (120) and a detected voltage of the electrical power supply network (120), in particular such that an auxiliary reactive power value is controlled as a function of a difference between the predefined voltage and the detected voltage, the virtual excitation voltage ($U_e$) being dependent on said auxiliary reactive power value.

13. The method as claimed in claim 12,
**characterized in that** in island network operation

- the auxiliary torque is controlled by way of a PI controller and
- the virtual rotational speed ($\omega$) results in particular from an integration of a difference torque, as difference between the auxiliary torque and the virtual electrical torque, by way of an integration time constant (1/J), and/or
- the auxiliary reactive power value is controlled by way of a PI controller, and
- the virtual excitation voltage ($U_e$) results in particular from an integration of a difference reactive power, as difference between the auxiliary reactive power and a detected reactive power, by way of an integration time constant (G).

14. A wind power installation (100) for feeding electrical power into a three-phase electrical power supply network (120) at a network connection point, comprising

- an inverter for generating an infeed current,
- a detection means for detecting an electrical network voltage (V, E), in particular at the network connection point,
- a control device for controlling the infeed, and the control device is prepared for carrying out a method, comprising the following steps:

- determining a virtual generator voltage using a machine model that emulates a behavior of a synchronous machine,
- preparing the detected network voltage (V, E) for comparison with the virtual generator voltage, and
- predefining a setpoint current ($I_{sabc}$) as predefinition for the infeed current as a function of the virtual generator voltage and as a function of the network voltage (V, E) prepared for comparison, wherein
- the inverter is prepared to generate the infeed current depending on the setpoint current ($I_{sabc}$) and to feed the generated infeed current at the network connection point into the electrical power supply network (120), wherein

preparing the detected network voltage (V, E) for comparison with the virtual generator voltagecomprises transforming the detected network voltage (V, E) into a space vector representation, and wherein
**characterized in that**
a virtual impedance (Zv) is taken into account for predefining the setpoint current ($I_{sabc}$), which virtual impedance (Zv) is taken into account as an impedance between an output of the machine model or the virtual synchronous machine and the network connection point, and the magnitude of the virtual impedance (Zv) is variable, and the virtual impedance (Zv) is selected depending on whether

- infeed is effected in a normal state of the electrical power supply network (120), or
- infeed is effected in a recovery mode after interruption or failure of the electrical power supply network (120), in which recovery mode the electrical power supply network (120) must be run up to a normal operating point.

15. The wind power installation (100) as claimed in claim 14,
**characterized in that**
the wind power installation (100), in particular the control device, is prepared to carry out a method as claimed in any of claims 1 to 15.

16. A wind farm (112) comprising a plurality of wind power installations (100), wherein

- wind power installations (100) as claimed in claim 14 or 15 are used and/or
- a farm infeed device, in particular a farm inverter, is provided, which is connected to a network connection point and is prepared to carry out a method as claimed in any of claims 1 to 13.

**Revendications**

1. Procédé d'injection de puissance électrique dans un réseau d'alimentation électrique triphasé (120) sur un point de raccordement au réseau, au moyen d'une éolienne (100), en utilisant un onduleur, comprenant les étapes :

- de détection d'une tension de réseau électrique (V, E), en particulier sur le point de raccordement au réseau,
- de détermination d'une tension de générateur virtuelle ($E_{gen}$) en utilisant un modèle de machine, qui émule un comportement d'une machine synchrone,
- de préparation de la tension de réseau détectée (V, E) pour comparaison avec la tension de générateur virtuelle ($E_{gen}$),
- de spécification d'un courant de consigne ($i_{sabc}$) comme spécification pour un courant d'injection en fonction de la tension de générateur virtuelle ($E_{gen}$) et en fonction de la tension de réseau (V, E) préparée pour la comparaison et
- de génération du courant d'injection en fonction du courant de consigne ($i_{sabc}$) et d'injection du courant d'injection généré sur le point de raccordement au réseau dans le réseau d'alimentation électrique (120), dans lequel

la préparation de la tension de réseau détectée (V, E) pour comparaison avec la tension de générateur virtuelle ($E_{gen}$) comprend une transformation de la tension de réseau détectée (V, E) en une représentation de Fresnel et **caractérisé en ce qu'**une impédance virtuelle (Zv) pour spécifier le courant de consigne ($i_{sabc}$) est prise en compte, qui est prise en compte comme une impédance (Zv) entre une sortie du modèle de machine ou de la machine synchrone virtuelle et le point de raccordement au réseau et dont la grandeur de l'impédance virtuelle (Zv) est variable, et

l'impédance virtuelle (Zv) est sélectionnée selon que si

- une injection est effectuée dans un état normal du réseau d'alimentation électrique (120), ou
- une injection est effectuée dans un mode de reconstruction après une coupure ou une panne du réseau d'alimentation électrique (120) et dans lequel le réseau d'alimentation électrique (120) doit être démarré à un point de fonctionnement normal.

2. Procédé selon la revendication 1,
   **caractérisé en ce que**
   la transformation de la tension de réseau détectée (V, E) dans une représentation de Fresnel est une transformation d/q.

3. Procédé selon la revendication 1 ou 2,
   **caractérisé en ce que**
   la tension de réseau (V, E) dans la représentation de Fresnel, dans laquelle elle a été transformée, est filtrée puis est retransformée de telle sorte que le courant de consigne ($i_{sabc}$) est spécifié en fonction de la tension de générateur virtuelle ($E_{gen}$) et en fonction de la tension de réseau retransformée (V, E).

4. Procédé selon l'une quelconque des revendications précédentes,
   **caractérisé en ce que**
   le modèle de machine se base sur une machine synchrone virtuelle avec un stator et un rotor et utilise, pour déterminer la tension de générateur ($E_{gen}$), une, plusieurs ou toutes les grandeurs de la liste qui présente les éléments suivants

   - un angle de rotation virtuel ($\vartheta$) du rotor
   - une vitesse virtuelle ($\omega$) du rotor,
   - une tension d'excitation virtuelle ($U_e$),
   - un courant statorique virtuel,
   - un moment d'inertie virtuel (J) du rotor
   - un couple de rotation virtuel ($T_e$) du rotor et
   - un frottement virtuel (Dp) du rotor.

5. Procédé selon la revendication 4,
   **caractérisé en ce que**

   - le courant d'injection généré est utilisé comme un courant de stator virtuel et par ailleurs ou en variante
   - le couple d'inertie virtuel (J) peut être réglé.

6. Procédé selon la revendication 4 ou 5,
   **caractérisé en ce que**

le moment d'inertie virtuel (J) est réglé en fonction d'un état de réseau ou d'une caractéristique de réseau.

**7.** Procédé selon l'une quelconque des revendications précédentes,
**caractérisé en ce que**, dans le modèle de machine,

- une différence de vitesse de rotation entre une vitesse de rotation virtuelle (ω) et une vitesse de rotation de référence est formée,
- une valeur filtrée de la vitesse de rotation virtuelle (ω) ou d'une fréquence spécifiée est utilisée comme vitesse de rotation de référence,
- la vitesse de rotation différentielle (Δω) est calculée par un gain de vitesse de rotation différentielle par rapport à un couple de rotation auxiliaire,
- le couple de rotation auxiliaire agit sur le moment d'inertie virtuel (J) du modèle de machine par l'intermédiaire d'un point d'addition pour réguler ainsi la vitesse de rotation virtuelle (ω) à la vitesse de rotation de référence, dans lequel de préférence
- pour la synchronisation du modèle de machine avec le réseau d'alimentation électrique (120), la vitesse de rotation différentielle (Δω) est mise sur zéro.

**8.** Procédé selon l'une quelconque des revendications précédentes,
**caractérisé en ce que**

- pour la synchronisation du modèle de machine avec le réseau d'alimentation électrique (120)
- une puissance de consigne est nulle,
- un modèle de calcul est utilisé pour calculer

-- des tensions de générateur virtuelles internes et/ou
-- un ou le couple de rotation virtuel ($T_e$), dans lequel

le modèle de calcul utilisé pour calculer une, plusieurs ou toutes les grandeurs de la liste présente

- un ou l'angle de rotation virtuel ($\vartheta$) du rotor
- une ou la vitesse de rotation virtuelle (ω) du rotor,
- une ou la tension d'excitation virtuelle ($U_e$), et
- le courant d'injection ou le courant de consigne ($i_{sabc}$), dans lequel

en particulier aucune fréquence du réseau d'alimentation électrique (120) n'est détectée.

**9.** Procédé selon l'une quelconque des revendications précédentes,
**caractérisé en ce que**

- une ou la tension d'excitation virtuelle ($U_e$) est déterminée
au moins en fonction
- d'une puissance réactive spécifiée et en option
- d'une tension de réseau électrique (V, E) spécifiée sur le point de raccordement au réseau.

**10.** Procédé selon l'une quelconque des revendications précédentes,
**caractérisé en ce que**
des grandeurs électriques du modèle de machine sont calculées en représentation de Fresnel, en particulier selon une transformation d/q.

**11.** Procédé selon l'une quelconque des revendications précédentes,
**caractérisé en ce que**
le courant d'injection est généré au moyen d'un procédé de bande de tolérance.

**12.** Procédé selon l'une quelconque des revendications précédentes,
**caractérisé en ce que**
dans un mode de réseau isolé, lorsque l'onduleur spécifie la fréquence de réseau,

- la vitesse de rotation virtuelle (ω) dépend d'une fréquence de réseau spécifiée, en particulier de telle sorte qu'en fonction d'une différence entre la vitesse de rotation virtuelle ($\omega$) et la fréquence de réseau spécifiée, un ou le couple de rotation auxiliaire agissant dans le modèle de machine est régulé, et/ou
- la tension d'excitation virtuelle ($U_e$)
- dépend d'une tension spécifiée du réseau d'alimentation électrique (120) et d'une tension détectée du réseau d'alimentation électrique (120), en particulier de telle sorte que, en fonction d'une différence entre la tension spécifiée et la tension détectée, une valeur de puissance réactive auxiliaire dont dépend la tension d'excitation virtuelle ($U_e$) est régulée.

**13.** Procédé selon la revendication 12,
**caractérisé en ce que** dans le mode de réseau isolé

- le couple de rotation auxiliaire est régulé par l'intermédiaire d'un régulateur PI et
- la vitesse de rotation virtuelle ($\omega$) résulte en particulier d'une intégration d'un couple différentiel, en tant que différence entre le couple de rotation auxiliaire et le couple de rotation électrique virtuel, par une constante de temps d'intégration (1/J) et/ou
- la valeur de puissance réactive auxiliaire est régulée par l'intermédiaire d'un régulateur PI, et
- la tension d'excitation virtuelle ($U_e$) résulte en particulier d'une intégration d'une puissance réactive différentielle, en tant que différence entre la puissance réactive auxiliaire et une puissance réactive détectée, par une constante de temps d'intégration (G).

**14.** Éolienne (100) destinée à injecter une puissance électrique dans un réseau d'alimentation électrique triphasé (120) sur un point de raccordement au réseau, comprenant

- un onduleur pour générer un courant d'injection,
- un moyen de détection destiné à détecter une tension de réseau électrique (V, E), en particulier sur le point de raccordement au réseau,
- un dispositif de commande destiné à commander l'injection, et le dispositif de commande étant préparé pour exécuter un procédé comprenant les étapes
- de détermination d'une tension de générateur virtuelle en utilisant un modèle de machine qui émule un comportement d'une machine synchrone,
- de préparation de la tension de réseau détectée (V, E) pour comparaison avec la tension de générateur virtuelle et
- de spécification d'un courant de consigne ($i_{sabc}$) comme spécification pour le courant d'injection en fonction de la tension de générateur virtuelle et en fonction de la tension de réseau (V, E) préparée pour la comparaison, dans laquelle
- l'onduleur est préparé pour générer le courant d'injection en fonction du courant de consigne ($i_{sabc}$) et pour injecter le courant d'injection généré sur le point de raccordement au réseau dans le réseau d'alimentation électrique (120), dans laquelle

la préparation de la tension de réseau (V, E) détectée pour comparaison avec la tension de générateur virtuelle comprend une transformation de la tension de réseau (V, E) détectée en une représentation de Fresnel et
**caractérisée en ce qu'**une impédance virtuelle (Zv) est prise en compte pour spécifier le courant de consigne ($i_{sabc}$) qui est prise en compte comme une impédance (Z) entre une sortie du modèle de machine ou de la machine synchrone virtuelle, et le point de raccordement au réseau et l'impédance virtuelle (Zv) est modifiable dans sa taille, et
l'impédance virtuelle (Zv) est sélectionnée selon que si

- une injection est effectuée dans un état normal du réseau d'alimentation électrique (120), ou
- une injection est effectuée dans un mode de reconstruction après une coupure ou une panne du réseau d'alimentation électrique (120) et dans lequel le réseau d'alimentation électrique (120) doit être démarré à un point de travail normal.

**15.** Éolienne (100) selon la revendication 14,
**caractérisée en ce que**
l'éolienne (100), en particulier le dispositif de commande, est préparée pour exécuter un procédé selon l'une quelconque des revendications 1 à 15.

16. Parc éolien (112) avec plusieurs éoliennes (100), dans lequel

- des éoliennes (100) selon la revendication 14 ou 15 sont utilisées et/ou
- un dispositif d'injection de parc, en particulier un onduleur de parc, est prévu, qui est raccordé à un point de raccordement au réseau et est préparé pour exécuter un procédé selon l'une quelconque des revendications 1 à 13.

Fig. 1

Fig. 2

$$\upsilon_g = V_g \sin\theta_g \qquad i \qquad \boxed{X_S \qquad e = E\sin\theta}$$

## Fig. 3

## Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011092193 A2

- EP 2963759 A1

**In der Beschreibung aufgeführte Nicht-Patentliteratur**

- **P. C. KRAUSE** ; **O. WASYNCZUK** ; **S. D. SUDHOFF**. Analysis of Electric Machinery and Drive Systems. John Wiley & Sons